# EUROPEAN PATENT APPLICATION

(11) **EP 4 775 637 A1**
(43) Date of publication of application: **15.07.2026**
(21) Application number: 23951563.8
(22) Date of filing: 08.09.2023
(51) Int. Cl.: C09D 1/00, C09D 7/20, C09D 7/61, C09D 7/63, C25B 1/23, C25B 3/03, C25B 3/26, C25B 9/00, H01M 8/00, H01M 8/04, H01M 8/12, H01M 8/1226, H01M 8/1253

(54) **METHOD FOR PRODUCING COATING COMPOSITION, YTTRIA-STABILIZED ZIRCONIA LAYER, ELECTROCHEMICAL ELEMENT, ELECTROCHEMICAL MODULE, ELECTROCHEMICAL DEVICE, ENERGY SYSTEM, SOLID OXIDE FUEL CELL, AND SOLID OXIDE ELECTROLYSIS CELL**

(71) Applicant: Osaka Gas Co., Ltd., Osaka-shi, Osaka 541-0046 (JP)
(72) Inventor: MATSUYOSHI, Hiroaki, Osaka-shi, Osaka 541-0046 (JP); ECHIGO, Mitsuaki, Sanuki-shi Kagawa 769-2193 (JP); MANABE, Kyohei, Osaka-shi, Osaka 541-0046 (JP)
(74) Representative: dompatent
(86) International application number: PCT/JP2023/032869
(87) International publication number: WO 2025/052665

(57) **Abstract**

Provided is a coating composition (b2) in which a film can be formed at a low cost by a simple method using zirconium alkoxide (o) and an yttrium compound (p) as starting raw materials, and in which a dense yttria-stabilized zirconia layer can be obtained. The coating composition (b2) containing the zirconium alkoxide (o), the yttrium compound (p), a chelating compound (q), a polyalkylene glycol (r), a catalyst (s), water (t), and an organic solvent (u) is obtained.

## Description

### TECHNICAL FIELD

The present invention relates to a method for producing a coating composition that can be applied onto surfaces of various members to form an yttria-stabilized zirconia layer, and also relates to various functional members including an yttria-stabilized zirconia layer.

### BACKGROUND ART

It has been known in the related art that surfaces of various members are coated with yttria-stabilized zirconia (hereinafter, also referred to as YSZ), and such various members are used for components required to have high hardness and inertness and refractory components that are used for jet engines and the like. Further, a solid electrolyte for a solid oxide fuel cell (SOFC) used at a relatively high temperature has also been known. The following techniques are available as applications to solid electrolytes for SOFC.

Patent Document 1 discloses a coating solution obtained by dissolving zirconium alkoxide and an yttrium nitrate hydrate in a first solvent that is a common solvent, and dissolving the resulting solution in a second solvent for homogenization.

Patent Document 1 describes that 2-propanol and 2-methyl-1-propanol are also suitable in addition to 1-propanol, and benzene, hexane, methanol, ethanol, and the like can be used as the first solvent (see paragraph 0025).

Meanwhile, the second solvent is described as a homogenizing solvent, and specifically, it is described that triethanolamine or diethanolamine can be used in addition to 2,4-pentanedione (see paragraph 0024).

Non Patent Document 2 discloses a test example in which a coating solution is prepared by dissolving titanium alkoxide and barium acetate in 1-propanol as a solvent and further adding polyvinylpyrrolidone as a stress relaxant, and a barium titanate (BaTiO₃) coating film free of cracks is prepared on the surface of a silica glass test piece by a dip coating method.

Here, in a case where the titanium alkoxide is subjected to a condensation reaction, a gel pore (a void) containing unreacted Ti-OH is generated in a condensation reactant of the titanium alkoxide. In a case where drying and calcination are performed in this state, a tensile stress is generated in the coating film, and defects such as cracks occur on the surface of the coating film.

Therefore, Non Patent Document 2 describes that the defects such as cracks on the surface of the coating film can be suppressed by adding polyvinylpyrrolidone to the coating solution, bonding the amide carbonyl group of polyvinylpyrrolidone to unreacted Ti-OH in gel pores (voids), and filling the pores (voids) in the titanium alkoxide condensation reactant (gel).

### Citation List

### Patent Document

Patent Document 1: Japanese Unexamined Patent Application No. 1995-235317

### Non Patent Document

Non Patent Document 2: Hiromitsu Kozuka, Masahiro Kajimura, Journal of the American Ceramic Society, 83, 1056-1062 (2000)

### SUMMARY OF INVENTION

### Technical Problem

However, it has been found that the technique disclosed in Patent Document 1 has the following problems.
(1) In a case where the yttria-stabilized zirconia is to be formed on a surface of an air electrode molded body composed of a porous body of a metal oxide, as an electrolyte layer, this molded body is immersed in a coating solution, and the dipping operation is repeated, thereby obtaining the yttria-stabilized zirconia coating. Therefore, in order to obtain the yttria-stabilized zirconia film having a film thickness of about 1 µm, it is required to repeat the dipping operation 20 times, which causes deterioration in terms of productivity.
(2) In the production of the coating solution composition, it is required to carry out two steps of dissolution with the first solvent and homogeneous dissolution with the second solvent, which complicates the production process.
(3) Although comparative examples will be described below in comparison with examples, in a case where this method is employed, cracks occur on the entire surface of the coating film, the surface is scabrous and has a rough appearance, the coating film is easily peeled off with a light touch of a finger, and a case where calcination, which is required after the formation of the coating film, is not performed occurs.

In addition, it has been found that the technique disclosed in Non Patent Document 2 has the following problems.
(1) In a case where polyvinylpyrrolidone is added to a coating composition in which a zirconium alkoxide and an yttrium compound are used as starting raw materials, unreacted Zr-OH remaining in a condensation reactant of the zirconium alkoxide and an amide carbonyl group of the polyvinylpyrrolidone are strongly bonded to each other. Therefore, the viscosity of the coating solution may increase and the coating solution may be gelated, which may cause a nozzle of a spray gun to be blocked.
(2) Although comparative examples will be described below in comparison with examples, the surface of the coating film is scabrous and has a rough appearance in a case where this method is employed.

Meanwhile, in a case where a coating film of yttria-stabilized zirconia is formed by a sol-gel reaction using zirconium alkoxide and an yttrium compound as starting raw materials, the hydrolysis rate of the zirconium alkoxide is usually extremely higher than that of typical titanium alkoxide or silicon alkoxide. Therefore, in a case where the coating film thickness is set to 1 µm or greater, defects such as breakage or cracks are likely to occur on the surface.

The present invention has been made in consideration of the above-described problems, and an object of the present invention is to provide a coating composition in which a film can be formed at a low cost by a simple method using zirconium alkoxide and an yttrium compound as starting raw materials, and an yttria-stabilized zirconia layer having few defects such as cracks can be obtained.

### Solution to Problem

A first characteristic configuration of the present invention is a method for producing a coating composition, the method including: mixing a composition containing zirconium alkoxide, an yttrium compound, a chelating compound, polyalkylene glycol, a catalyst, water, and an organic solvent to produce a coating composition.

The coating composition produced by this method contains water necessary for hydrolysis of the zirconium alkoxide, and further contains a catalyst for inducing the hydrolysis and a condensation reaction thereof, and thus the coating composition can be formed to have a desired coating film thickness with a simple method of applying the coating composition, for example, by using an air spray or the like. In the examination conducted by the inventors, in a case where the coating composition of the present invention is used, an yttria-stabilized zirconia layer having few defects such as cracks can be easily obtained.

A second characteristic configuration of the present invention is that in the method for producing a coating composition, in the coating composition, a content of the zirconium alkoxide is 10% to 30% by mass, a content of the yttrium compound is 1% to 10% by mass, a content of the chelating compound is 3% to 15% by mass, a content of the polyalkylene glycol is 0.3% to 7% by weight, a content of the catalyst is 0.1% to 2% by mass, a content of the water is 0.1% to 2% by mass, and a content of the organic solvent is the remainder.

In a case where the content of the zirconium alkoxide is less than 10% by mass, the raw material tends to be insufficient, and thus the production of a target product is delayed. Meanwhile, in a case where the content of the zirconium alkoxide is greater than 30% by mass, hydrolysis and condensation may proceed excessively fast.

In a case where the content of the yttrium compound is less than 1% by mass, the raw material tends to be insufficient, and thus it is difficult to obtain a target product. Meanwhile, in a case where the content of the yttrium compound is greater than 10% by mass, the amount of yttrium in the film to be produced may be excessive.

In a case where the content of the chelating compound is less than 3% by mass, the effect of suppressing the hydrolysis rate and polycondensation rate of the zirconium alkoxide is unlikely to be obtained. Meanwhile, in a case where the content of the chelating compound is greater than 15% by mass, the hydrolysis rate and the polycondensation rate are likely to be excessively suppressed.

The polyalkylene glycol plays a role of filling pores (voids) containing unreacted Zr-OH remaining in the condensation reactant of the zirconium alkoxide. By filling the pores (voids), cracks and the like on the surface of the coating film can be suppressed during drying and calcination.

In consideration of the role of filling pores (voids) containing unreacted Zr-OH remaining in the condensation reactant of the zirconium alkoxide, the amount of polyalkylene glycol to be added is preferably about 0.05 to 0.5 mol with respect to 1 mol of the zirconium alkoxide. Further, the content of polyalkylene glycol in the coating composition is preferably 0.3% to 7% by mass.

In a case where the content of the polyalkylene glycol is less than 0.3% by mass, the effect of filling pores (voids) containing unreacted Zr-OH remaining in the zirconium alkoxide condensation reactant is unlikely to be obtained. Meanwhile, in a case where the content of the polyalkylene glycol is greater than 7% by mass, there is a concern that hydrolysis and polycondensation of the zirconium alkoxide are inhibited.

The catalyst is used as a peptizer that uniformly initiates the dissolution and hydrolysis of the zirconium alkoxide and simultaneously uniformly disperses a sol produced by the hydrolysis.

In a case where the content of the catalyst is less than 0.1% by mass, the catalyst may not be fully active. Even though greater than 2% by mass of the catalyst is added, no further effect can be obtained.

Water is used for dissolving and hydrolyzing the zirconium alkoxide. The amount of water to be added is preferably about 0.25 to 1.0 mol with respect to 1 mol of zirconium alkoxide. Further, the content of water in the coating composition is preferably 0.1% to 2% by mass.

Since water is also used for dissolving and hydrolyzing zirconium alkoxide, the purpose of promoting a hydrolysis reaction unique to the composition is unlikely to be achieved in a case where the amount of water is less than 0.25 mol. Even though greater than 1.0 mol of water is added, no further effect can be obtained. From the viewpoint of coatability and ease of handling of the coating composition, the content of the water is preferably in a range of about 0.1% to 2% by mass.

The organic solvent is used for dissolving zirconium alkoxide, an yttrium compound, a chelating compound, polyalkylene glycol, a catalyst, and water.

Since an alkoxy group of the zirconium alkoxide is hydrophobic and does not mix with water, an alcohol for mixing both an alkoxide and water with each other is necessary.

A third characteristic configuration of the present invention is that in the method for producing a coating composition, the zirconium alkoxide is any one or more of zirconium (IV) methoxide, zirconium (IV) ethoxide, zirconium (IV) n-propoxide, zirconium (IV) i-propoxide, zirconium (IV) n-butoxide, zirconium (IV) i-butoxide, zirconium (IV) sec-butoxide, or zirconium (IV) t-butoxide.

That is, the zirconium alkoxide is a starting raw material for yttria-stabilized zirconia. Among these, zirconium (IV) n-propoxide, zirconium (IV) i-propoxide, and zirconium (IV) n-butoxide are preferable from the viewpoint of availability and hydrolyzability. As a result of combining these compounds with a chelating compound described below, an yttria-stabilized zirconia layer without breakage or peeling can be obtained.

A fourth characteristic configuration of the present invention is that in the method for producing a coating composition, the yttrium compound is any one or more of yttrium nitrate, yttrium chloride, yttrium sulfate, yttrium phosphate, yttrium acetate, yttrium carbonate, yttrium (III) ethoxide, yttrium (III) n-propoxide, or yttrium (III) i-propoxide.

That is, the yttrium compound is a starting raw material of yttria-stabilized zirconia. In a case where an inorganic acid salt is used for the yttrium compound, it is preferable to use the same type of inorganic acid as the catalyst described below. For example, in a case where yttrium nitrate is used, it is preferable to use nitric acid. The same applies to an organic acid salt.

Among these, yttrium nitrate, yttrium chloride, yttrium sulfate, yttrium phosphate, yttrium carbonate, yttrium acetate, yttrium (III) i-propoxide are preferable from the viewpoint of availability and reactivity. In a case of using these compounds, the yttria-stabilized zirconia layer can be formed by a reaction with a hydrolysis product of the zirconium alkoxide.

A fifth characteristic configuration of the present invention is that in the method for producing a coating composition, the chelating compound is represented by General Formula 1.

R₁-CO-CH₂-CO-R₂ (General Formula 1)

[In the formula, R₁ and R₂ represent an alkyl group having 1 to 6 carbon atoms (including a fluorinated alkyl group) or a monocyclic or bicyclic aryl group; R₁ and R₂ are the same as or different from each other, and each represents an alkyl group having 1 to 6 carbon atoms or a monocyclic or bicyclic aryl group. R₁ and R₂ may be linked to each other to form a cyclic alkyl group.]

This chelating compound coordinates with the zirconium alkoxide to suppress the hydrolysis rate and polycondensation rate of the zirconium alkoxide.

A sixth characteristic configuration of the present invention is that in the method for producing a coating composition, the chelating compound is any one or more of 2,4-pentanedione, 2,4-hexanedione, 3,5-heptanedione, 2,6-dimethyl-3,5-heptanedione, 2,2,6,6-tetramethyl-3,5-heptanedione, 1-phenyl-1,3-butanedione, 1,3-diphenyl-1,3-propanedione, 1,1,1-trifluoro-2,4-pentanedione, 1,1,1,5,5,5-hexafluoro-2,4-pentanedione, or 1,3-cyclohexanedione.

Among these, 2,4-pentanedione, 3,5-heptanedione, 2,6-dimethyl-3,5-heptanedione, 2,2,6,6-tetramethyl-3,5-heptanedione, 1-phenyl-1,3-butanedione, or 1,3-diphenyl-1,3-propanedione are preferable from the viewpoints of the availability and the coordination force to zirconium alkoxide. Since R₁ and R₂ represent an electron donating group of a methyl group, an ethyl group, a propyl group, a butyl group, or a phenyl group, these compounds have an excellent coordination force to the zirconium alkoxide, and suppress the hydrolysis reaction rate and polycondensation reaction rate of the zirconium alkoxide, and thus the yttria-stabilized zirconia layer without breakage or peeling can be obtained.

A seventh characteristic configuration of the present invention is that in the method for producing a coating composition, the polyalkylene glycol is any one or more of tetraethylene glycol, pentaethylene glycol, polyethylene glycol 200, polyethylene glycol 400, polyethylene glycol 600, polyethylene glycol 1000, tripropylene glycol, tetrapropylene glycol, polypropylene glycol 400, polypropylene glycol 700, or polypropylene glycol 1000.

That is, examples of the polyalkylene glycol include polyethylene glycol and polypropylene glycol, and the molecular weight of the polyalkylene glycol is preferably about 100 to 2000 and more preferably about 200 to 1000.

In a case where the polyalkylene glycol is polyethylene glycol, polyethylene glycol is represented by General Formula 2.

H (OCH₂CH₂) ₙ OH (General Formula 2)

[In the formula, n represents an integer of 2 or greater.]

Since the molecular weight is 194 in a case of n = 4 and the molecular weight is 1030 in a case of n = 23, it is considered that polyethylene glycol having a molecular weight in a range of about 200 to about 1000 is suitable for filling pores (voids) containing unreacted Zr-OH remaining in the zirconium alkoxide condensation reactant.

Meanwhile, in a case where the polyalkylene glycol is polypropylene glycol, polypropylene glycol is represented by General Formula 3.

H (OCHCH₃CH₂) ₙ OH (General Formula 3)

[In the formula, n represents an integer of 2 or greater.]

Since the molecular weight is 192 in a case of n = 3 and the molecular weight is 1004 in a case of n = 17, it is considered that polypropylene glycol having a molecular weight in a range of about 200 to about 1000 is suitable for filling pores (voids) containing unreacted Zr-OH remaining in the condensation reactant of the zirconium alkoxide.

Among these, the polyalkylene glycol may be tetraethylene glycol, pentaethylene glycol, polyethylene glycol 200, polyethylene glycol 400, polyethylene glycol 600, polyethylene glycol 1000, tripropylene glycol, tetrapropylene glycol, polypropylene glycol 400, polypropylene glycol 700, or polypropylene glycol 1000 from the viewpoints of the availability, the molecular size, the film forming properties, and the like.

An eighth characteristic configuration of the present invention is that in the method for producing a coating composition, the catalyst is any one or more of hydrochloric acid, nitric acid, sulfuric acid, phosphoric acid, carbonic acid, or acetic acid.

Among these, nitric acid, hydrochloric acid, sulfuric acid, phosphoric acid, and acetic acid are preferable from the viewpoints of the hydrolyzability and peptizing properties of the zirconium alkoxide. In a case of using these acids, since the zirconium alkoxide can be hydrolyzed uniformly and the generated sol can be uniformly dispersed in the reaction solution, an yttria-stabilized zirconia layer without breakage or peeling can be obtained.

A ninth characteristic configuration of the present invention is that in the method for producing a coating composition, the organic solvent is any one or more of methanol, ethanol, 1-propanol, 2-propanol, 1-butanol, 2-methyl-1-propanol, 2-butanol, or 2-methyl-2-propanol.

The organic solvent may be used alone or in the form of a mixture of two or more kinds thereof. The content of the organic solvent, which is the remainder of the other components (zirconium alkoxide, yttrium compound, chelating compound, catalyst, and water), in the coating composition is preferably 40% to 80% by mass in a state in which the conditions of the other components are satisfied.

Here, in a case where the content of the organic solvent is less than 40% by mass, sufficient mixing performance may not be obtained. In a case where greater than 80% by mass of the organic solvent is added, raw material components tend to be insufficient.

As the alcohol, for example, an alcohol corresponding to the alkoxide of the zirconium alkoxide to be used may be used, but the alcohol is not particularly limited as long as the zirconium alkoxide and the yttrium compound can be dissolved.

### [Usage form of yttria-stabilized zirconia layer]

Hereinafter, a case where the yttria-stabilized zirconia layer according to the present invention is employed for "electrochemical element" in the present invention will be described.

In regard to "electrochemical element" in the present invention, the electrochemical element is configured to include a counter electrode layer on a side opposite to an electrode layer with an electrolyte layer interposed therebetween.

Here, in a case where this electrochemical element serves as a fuel cell, for example, the electrode layer can serve as a fuel electrode layer, and the counter electrode layer can serve as an air electrode layer to obtain generated electric power between both electrodes. That is, the electrochemical element can serve as a fuel cell unit cell by supplying a reduction gas (typically a fuel gas containing hydrogen) to the fuel electrode layer and supplying an oxidization gas (typically air containing oxygen) to the air electrode layer.

On the contrary, in a case where a predetermined electric power is supplied between both electrodes, this electrochemical element can receive water supplied and can serve as an electrolysis element (electrolyzing element) for decomposing the water. Hereinafter, the electrolyzing process will also be simply referred to as electrolysis.

Therefore, in the present invention, the electrochemical device is a fuel cell device in a case where the electrochemical element serves as a fuel cell, and the electrochemical device is an electrolyzing device in a case where the electrochemical element serves as an electrolyzing cell.

Since an yttria-stabilized zirconia layer can be easily produced by using the coating composition produced by the method for producing a coating composition according to the present invention, the coating composition can be employed for producing at least the electrolyte layer in the present invention. In addition, the yttria-stabilized zirconia can also be employed as a material of a component other than the electrolyte layer used in the electrochemical element, such as a material of an electrode layer or a material of an interlayer that may be provided between the electrode layer and the electrolyte layer.

That is, a tenth characteristic configuration of the present invention is an electrochemical element according to the present invention, which is configured to include an yttria-stabilized zirconia layer obtained by curing the coating composition produced by the method for producing a coating composition according to the present invention.

An eleventh characteristic configuration of the present invention is an electrochemical element including: the yttria-stabilized zirconia layer according to the present invention.

Further, a twelfth characteristic configuration of the present invention is that the electrochemical element includes a metal support.

According to the above-described characteristic configuration, the electrochemical element can be supported by a robust metal support, and the electrical conductivity required between the electrochemical elements can also be ensured.

A thirteenth characteristic configuration of the present invention is an electrochemical module including: a plurality of the electrochemical elements which are disposed in a state of being assembled.

According to the above-described characteristic configuration, since the plurality of electrochemical elements described above are disposed in a state of being assembled, a compact electrochemical module having high performance, excellent strength, and excellent reliability can be obtained while the material cost and the processing cost are suppressed.

A fourteenth characteristic configuration of the present invention is an electrochemical device including: the electrochemical element or the electrochemical module; and a fuel converter that supplies a gas containing a reduction gas to the electrochemical element or the electrochemical module, or a fuel converter that converts a gas containing a reduction gas generated by the electrochemical element or the electrochemical module.

According to the above-described characteristic configuration, in a case where the electrochemical element or electrochemical module serves as a fuel cell, hydrogen can be generated by a fuel converter such as a reformer from a natural gas or the like to be supplied by using an existing raw fuel supply infrastructure, such as a city gas, and can be circulated through the fuel cell. Further, in a case where the electrochemical element or the electrochemical module operates as an electrolysis cell, for example, the electrochemical element or the electrochemical module serves as an electrochemical device that converts hydrogen generated by an electrolysis reaction of water into methane through a reaction with carbon monoxide or carbon dioxide in the fuel converter.

A fifteenth characteristic configuration of the present invention is an electrochemical device including: at least the electrochemical element or the electrochemical module; and an electric power converter that extracts electric power from the electrochemical element or the electrochemical module, or an electric power converter that supplies electric power to the electrochemical element or the electrochemical module.

According to the above-described characteristic configuration, the electric power converter can convert the electric power extracted from the electrochemical element or the electrochemical module and supply the electric power to the outside, or can supply the electric power from the outside to the electrochemical element or the electrochemical module for use in electrolysis. Further, in a case where an inverter is used as the electric power converter, for example, the inverter can boost the voltage or convert a direct current into an alternating current, and thus the electric output obtained from the electrochemical module is easily used, which is preferable. Meanwhile, in a case where the electrochemical element and the electrochemical module are used for electrolysis, a direct current can be obtained from an alternating current power source, and accordingly an electrochemical device used for electrolysis can be constructed.

A sixteenth characteristic configuration of the present invention is an energy system including: the electrochemical device; and an exhaust heat utilization section that reuses heat to be discharged from the electrochemical device.

According to the above-described characteristic configuration, since the energy system includes the electrochemical device and the exhaust heat utilization section that reuses heat discharged from the electrochemical device, the energy system having excellent durability, reliability, performance, and energy efficiency can be achieved. Moreover, a hybrid system having excellent energy efficiency can be achieved in combination with a power generation system which generates power by utilizing combustion heat of the unused fuel gas to be discharged from the electrochemical device.

Further, a seventeenth characteristic configuration of the present invention is a solid oxide fuel cell including: the electrochemical element, in which a power generation reaction is caused by the electrochemical element.

Meanwhile, an eighteenth characteristic configuration of the present invention is a solid oxide electrolysis cell including: the electrochemical element, in which an electrolysis reaction is carried out by the electrochemical element.

### BRIEF DESCRIPTION OF DRAWINGS

FIG. 1 is a view showing production states of a coating composition.
FIG. 2 is a view showing production states of the coating composition containing yttria-stabilized zirconia fine particles.
FIG. 3 is a view showing a coating state of the coating composition.
FIG. 4 is a photomicrograph showing a dried product at 80°C in Example 1.
FIG. 5 is a photomicrograph showing a calcinated product at 1000°C in Example 1.
FIG. 6 is an X-ray diffraction chart showing a calcinated product at 1000°C in Example 1.
FIG. 7 is a photomicrograph showing a dried product at 80°C in Example 2.
FIG. 8 is a photomicrograph showing a calcinated product at 1000°C in Example 2.
FIG. 9 is an X-ray diffraction chart showing a calcinated product at 1000°C in Example 2.
FIG. 10 is a photomicrograph showing a dried product at 80°C in Example 3.
FIG. 11 is a photomicrograph showing a calcinated product at 1000°C in Example 3.
FIG. 12 is an X-ray diffraction chart showing a calcinated product at 1000°C in Example 3.
FIG. 13 is a photomicrograph showing a dried product at 80°C in Example 4.
FIG. 14 is a photomicrograph showing a calcinated product at 1000°C in Example 4.
FIG. 15 is a photomicrograph showing a dried product at 80°C in Example 5.
FIG. 16 is a photomicrograph showing a calcinated product at 1000°C in Example 5.
FIG. 17 is a photomicrograph showing a dried product at 80°C in Example 6.
FIG. 18 is a photomicrograph showing a calcinated product at 1000°C in Example 6.
FIG. 19 is a photomicrograph showing a dried product at 80°C in Example 7.
FIG. 20 is a photomicrograph showing a calcinated product at 1000°C in Example 7.
FIG. 21 is a photomicrograph showing a dried product at 80°C in Example 8.
FIG. 22 is a photomicrograph showing a calcinated product at 1000°C in Example 8.
FIG. 23 is a photomicrograph showing a dried product at 80°C in Example 9.
FIG. 24 is a photomicrograph showing a calcinated product at 1000°C in Example 9.
FIG. 25 is a photomicrograph showing a dried product at 80°C in Example 10.
FIG. 26 is a photomicrograph showing a calcinated product at 1000°C in Example 10.
FIG. 27 is a photomicrograph showing a dried product at 80°C in Comparative Example 1.
FIG. 28 is a photomicrograph showing a calcinated product at 1000°C in Comparative Example 1.
FIG. 29 is a photomicrograph showing a dried product at 80°C in Comparative Example 3.
FIG. 30 is a photomicrograph showing a calcinated product at 1000°C in Comparative Example 3.
FIG. 31 is a cross-sectional view of a main part showing a configuration example of an electrochemical element.
FIG. 32 is a view showing a configuration example of an electrochemical module.
FIG. 33 is a view showing a configuration example of an electrochemical device that serves as a fuel cell device.
FIG. 34 is a cross-sectional view of a main part showing another configuration example of the electrochemical element.
FIG. 35 is a view showing another usage form in which the electrochemical element is used in an electrolysis reaction section.
FIG. 36 is a view showing another embodiment including the electrolysis reaction section, a reverse water gas shift reaction section, and a hydrocarbon synthesis reaction section.

### DESCRIPTION OF EMBODIMENTS

Hereinafter, the present invention will be described in detail based on examples, but the present invention is not limited thereto.

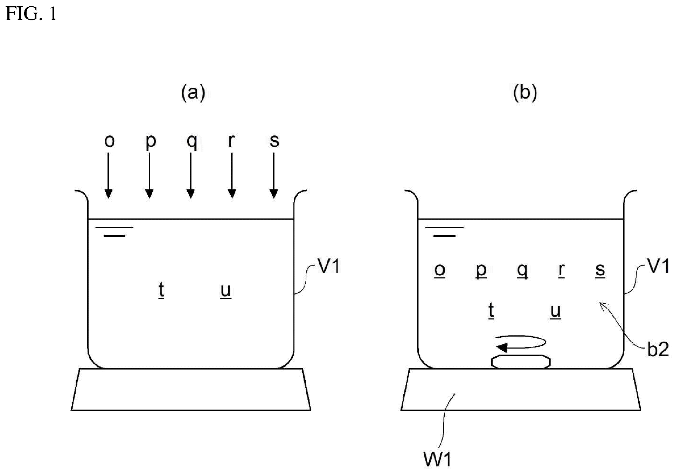

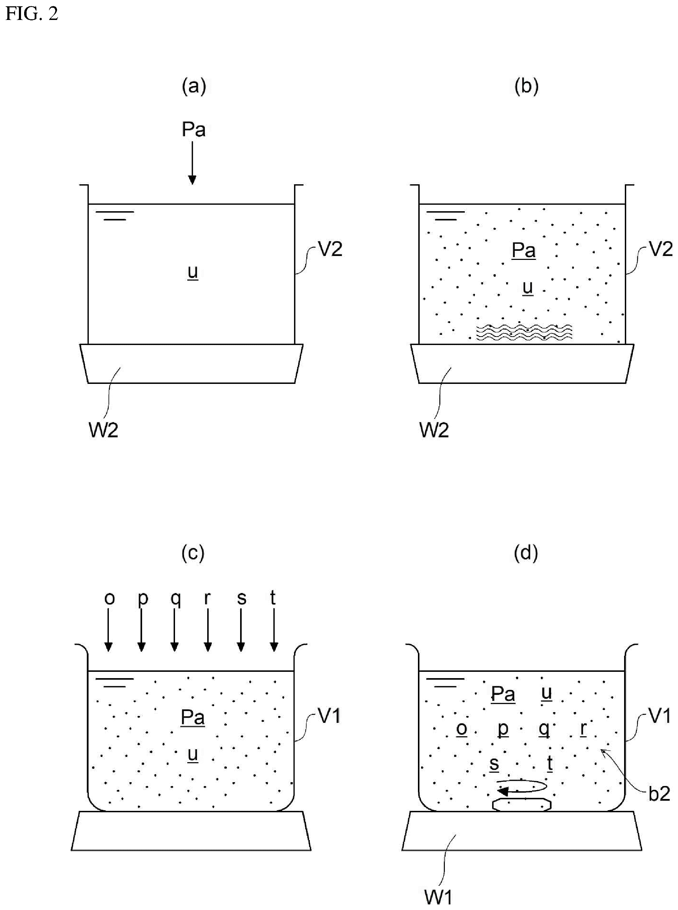

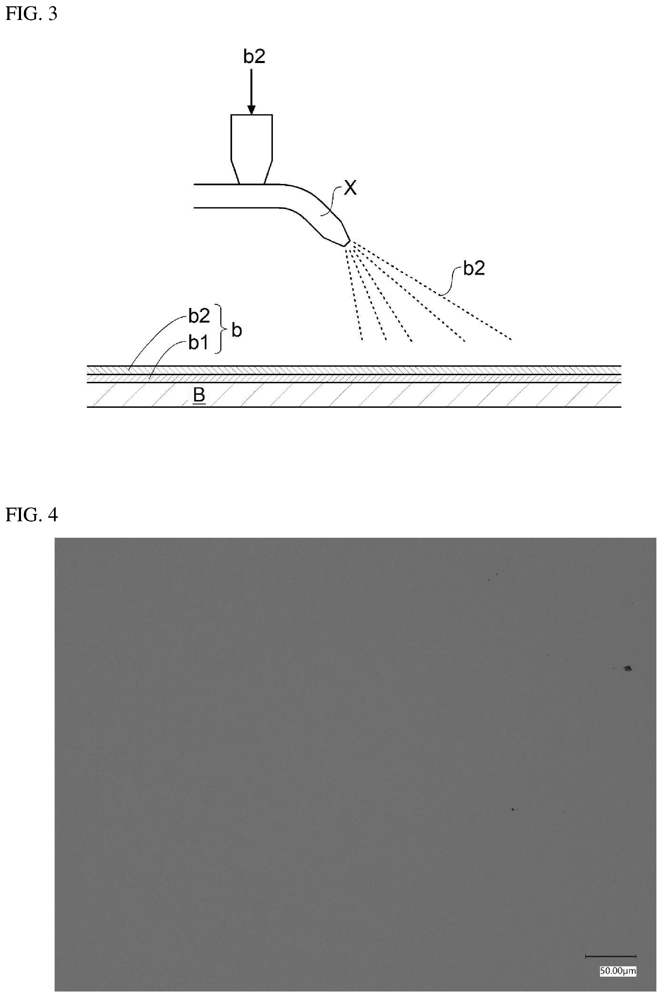

FIGS. 1 and 2 show production states of a coating composition b2 according to the present invention, and FIG. 3 shows an example of a coating state thereof. FIG. 1 shows an example of a case where the coating composition b2 contains no yttria-stabilized zirconia fine particles Pa, and FIG. 2 shows an example of a case where the coating composition b2 contains the yttria-stabilized zirconia fine particles Pa.

As described above, the coating composition b2 to be produced by the method for producing a coating composition according to the present invention is obtained by mixing zirconium alkoxide o, an yttrium compound p, a chelating compound q, polyalkylene glycol r, a catalyst s, water t, and an organic solvent u and containing these components. Further, as shown in FIG. 3, this coating composition b2 is applied to a predetermined position, dried and calcinated to be cured, and thus an yttria-stabilized zirconia (YSZ) layer can be obtained.

Here, the zirconium alkoxide o is a starting raw material of the yttria-stabilized zirconia coating layer, and examples thereof include zirconium (IV) methoxide, zirconium (IV) ethoxide, zirconium (IV) n-propoxide, zirconium (IV) i-propoxide, zirconium (IV) n-butoxide, zirconium (IV) i-butoxide, zirconium (IV) sec-butoxide, and zirconium (IV) t-butoxide.

The content of this zirconium alkoxide o in the composition b2 is preferably 10% to 30% by mass.

In the examples and the comparative examples described below, an example of using zirconium (IV) n-butoxide will be shown.

Examples of the yttrium compound p include yttrium nitrate, yttrium chloride, yttrium acetate, yttrium carbonate, yttrium (III) ethoxide, yttrium (III) n-propoxide, and yttrium (III) i-propoxide.

The content of the yttrium compound p in the coating composition b2 is preferably 1% to 10% by mass.

In the examples and the comparative examples described below, an example of using yttrium nitrate will be shown.

Examples of the chelating compound q includes 2,4-pentanedione, 2,4-hexanedione, 3,5-heptanedione, 2,6-dimethyl-3,5-heptanedione, 2,2,6,6-tetramethyl-3,5-heptanedione, 1-phenyl-1,3-butanedione, 1,3-diphenyl-1,3-propanedione, 1,1,1-trifluoro-2,4-pentanedione, and 1,1,1,5,5,5-hexafluoro-2,4-pentanedione, 1,3-cyclohexanedione.

The amount of the chelating compound q to be added is preferably about 0.5 to 3 mol with respect to 1 mol of zirconium alkoxide. The content of the chelating compound q in the coating composition b2 is preferably 3% to 15% by mass.

In the examples and the comparative examples described below, an example of using 2,4-pentanedione will be shown.

Examples of the polyalkylene glycol r include tetraethylene glycol, pentaethylene glycol, polyethylene glycol 200, polyethylene glycol 400, polyethylene glycol 600, polyethylene glycol 1000, tripropylene glycol, tetrapropylene glycol, polypropylene glycol 400, polypropylene glycol 700, and polypropylene glycol 1000.

In consideration of playing a role of filling pores (voids) containing unreacted Zr-OH remaining in the condensation reactant of the zirconium alkoxide, the amount of the polyalkylene glycol r to be added is preferably about 0.05 to 0.5 mol with respect to 1 mol of the zirconium alkoxide. Further, the content of the polyalkylene glycol r in the coating composition b2 is preferably 0.3% to 7% by mass.

In the examples described below, examples of using polyethylene glycol 200, polyethylene glycol 400, polyethylene glycol 600, tripropylene glycol, polypropylene glycol 400, and polypropylene glycol 700 as polyalkylene glycol will be shown. Further, in a case where polyalkylene glycol having a molecular weight of 700 or less is used as in the examples, the content thereof in the coating composition is preferably 0.3% to 5% by mass.

Hydrochloric acid, acetic acid, nitric acid, sulfuric acid, phosphoric acid, or the like can be used as the catalyst "s." The content of the catalyst s in the coating composition b2 is preferably 0.1% to 2% by mass.

In the examples and the comparative examples described below, an example of using nitric acid will be shown.

Since water t is also used for hydrolysis of the zirconium alkoxide o, the purpose of promoting the hydrolysis reaction of the composition is unlikely to be achieved in a case where the content of the water t is less than 0.25 mol, and no further effect is obtained in a case where the content thereof is greater than 1.0 mol. From the viewpoints of the coatability and ease of handling of the coating composition b2, the content of the water t in the coating composition b2 is preferably in a range of about 0.1% to 2% by mass.

Examples of the organic solvent u include methanol, ethanol, 1-propanol, 2-propanol, 1-butanol, 2-methyl-1-propanol, 2-butanol, and 2-methyl-2-propanol. The organic solvent u is the remainder of the other components.

In Examples 1 to 10 and Comparative Examples 1 and 3 described below, examples of using a mixed solvent of ethanol and 1-butanol will be shown. However, since Comparative Example 2 is a test of reproducing Patent Document 1, 1-propanol was used according to Patent Document 1.

### [Examples and Comparative Examples]

Examples 1 to 10 and Comparative Examples 1 to 3 shown below are examples in which, as shown in FIG. 3, the coating composition b2 according to the present invention was applied to an upper surface of a test piece B (ϕ25 × 3 mm, material SUS430, gadolinium-doped ceria b1 had been screen-printed on the surface) and was heat-treated at a predetermined temperature for a predetermined time, and an evaluation was performed on whether or not an yttria-stabilized zirconia layer that was a target layer was obtained.

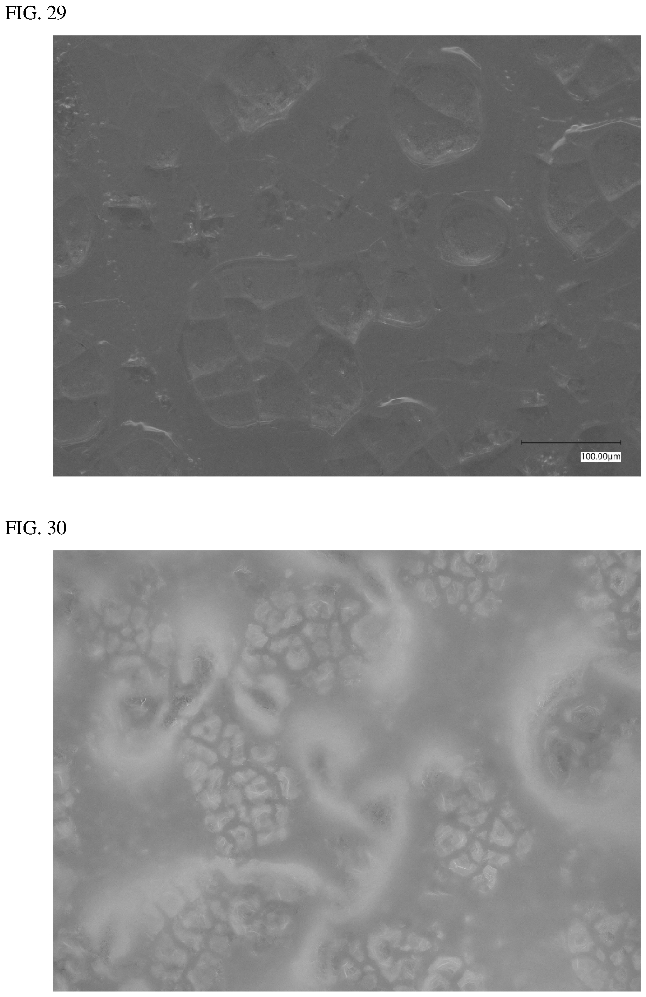

As described below, the yttria-stabilized zirconia layer can be used as an electrolyte layer 4, but the gadolinium-doped ceria b1 is assumed to be used as an interlayer 3 provided between the electrolyte layer 4 and an electrode layer 2, which constitute the electrochemical element E (see paragraphs [0124] to [0134], and FIG. 30).

FIG. 1 shows, as an example of mixing, a state in which the raw materials (the zirconium alkoxide o, the yttrium compound p, the chelating compound q, the polyalkylene glycol r, the catalyst s, the water t, and the organic solvent u) are put into a glass container V1 and mixed using a magnetic stirrer W1 (FIGS. 1(a) and 1(b)).

FIG. 2 shows an example in which a mixed solution of the yttria-stabilized zirconia fine particles Pa and the organic solvent u is prepared by a vibration stirrer W2 using a resin container V2 (FIGS. 2(a) and 2(b)), and the residual components (the zirconium alkoxide o, the yttrium compound p, the chelating compound q, the polyalkylene glycol r, the catalyst s, and the water t) are mixed in the glass container V1 using a magnetic stirrer W1 (FIGS. 2(c) and 2(d)). Further, as shown in FIG. 2, the layer thickness of the yttria-stabilized zirconia layer (the film thickness of the coating film), which is the target layer, can be easily ensured by adding the yttria-stabilized zirconia fine particles Pa serving as a filler (aggregate). In addition, it is also possible to expect that the stress in the yttria-stabilized zirconia layer is relaxed and defects such as cracks are prevented.

FIG. 3 shows a state in which a predetermined surface is coated with the coating composition b2 by using an air spray X. In the explanations of the examples and the comparative examples described below, the reference numerals shown in the drawings are omitted in order to clarify the name and amount of each raw material used.

### (Example 1)

6.40 g of zirconium (IV) n-butoxide, 1.60 g of an yttrium nitrate hexahydrate, 3.34 g of 2,4-pentanedione, 0.67 g of polyethylene glycol (average molecular weight: 200), 0.26 g of 60% nitric acid, 0.12 g of water, 14.42 g of ethanol, and 21.59 g of 1-butanol were blended in a 150 ml glass container and stirred for 3 hours using a magnetic stirrer, thereby preparing 50 g of a coating composition.

In Example 1, the amount of polyethylene glycol (average molecular weight: 200) added was 0.2 mol with respect to 1 mol of zirconium (IV) n-butoxide. The content of the polyethylene glycol in the coating composition was 1.34% by mass.

Separately, a coating film was prepared by coating a test piece as an object with the coating composition using an air spray and performing a heat treatment on the coating composition at 80°C for 30 minutes. FIG. 4 shows the results of observing the coating film after drying the coating film at 80°C with a microscope (optical microscope) at a magnification of 500 times. As shown in FIG. 4, a smooth coating film was obtained, and defects such as cracks were not found.

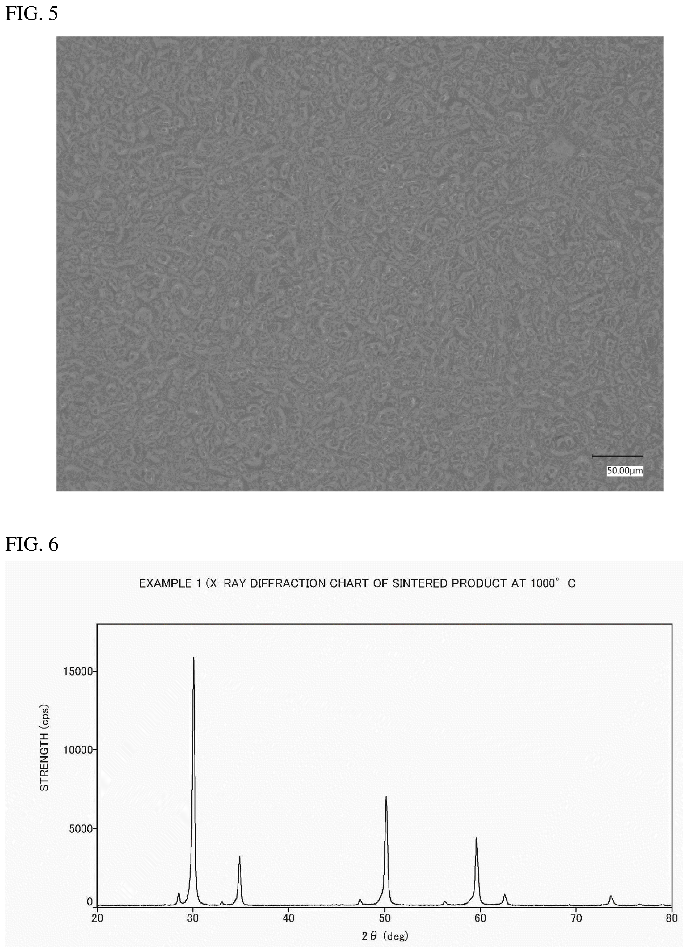

Further, the coating film was maintained at 1000°C for 60 minutes to prepare a coating film. FIG. 5 shows the results of observing the coating film after calcinating the coating film at 1000°C with a microscope (optical microscope) at a magnification of 500 times. As shown in FIG. 5, damage such as breakage or peeling was not found on the coating film, and the film thickness was about 2 µm.

In a case where the coating film calcinated at 1000°C by X-ray diffraction was analyzed, as shown in FIG. 6, clear peaks of yttria-stabilized zirconia were observed at 2θ of 30, 35, 50, 60, 62, and 74.

### (Example 2)

6.32 g of zirconium (IV) n-butoxide, 1.58 g of an yttrium nitrate hexahydrate, 3.30 g of 2,4-pentanedione, 1.32 g of polyethylene glycol (average molecular weight: 400), 0.26 g of 60% nitric acid, 0.12 g of water, 14.23 g of ethanol, and 22.88 g of 1-butanol were blended in a 150 ml glass container and stirred for 3 hours using a magnetic stirrer, thereby preparing 50 g of a coating composition.

In Example 2, the amount of polyethylene glycol (average molecular weight: 400) added was 0.2 mol with respect to 1 mol of zirconium (IV) n-butoxide. The content of the polyethylene glycol in the coating composition was 2.64% by mass.

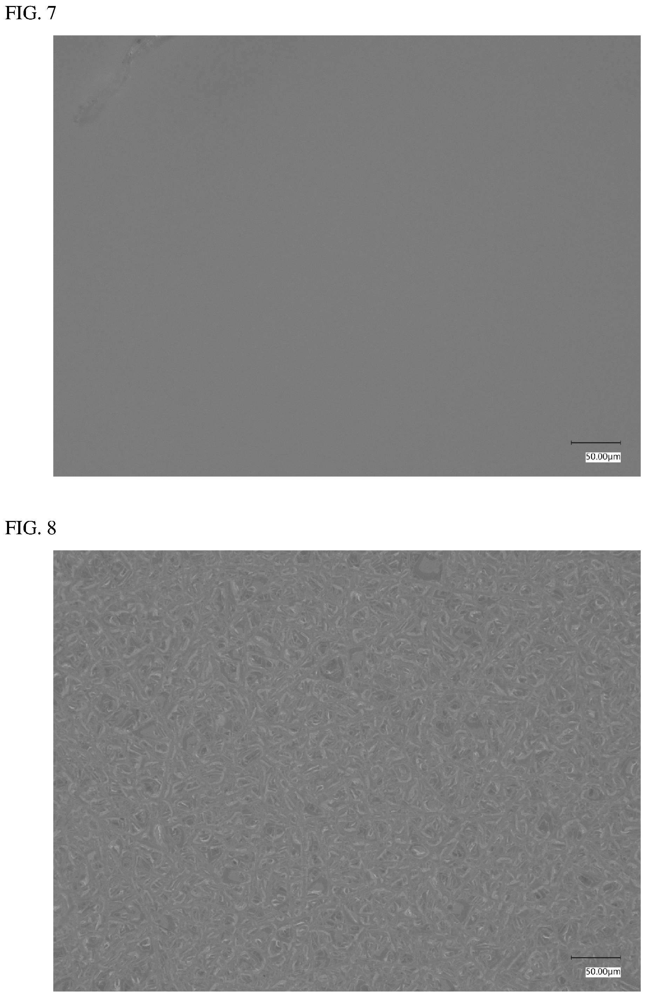

Separately, a coating film was prepared by coating a test piece as an object with the coating composition using an air spray and performing a heat treatment on the coating composition at 80°C for 30 minutes. FIG. 7 shows the results of observing the coating film after drying the coating film at 80°C with a microscope (optical microscope) at a magnification of 500 times. As shown in FIG. 7, a smooth coating film was obtained, and defects such as cracks were not found.

Further, the coating film was maintained at 1000°C for 60 minutes to prepare a coating film. FIG. 8 shows the results of observing the coating film after calcinating at 1000°C with a microscope (optical microscope) at a magnification of 500 times. As shown in FIG. 8, damage such as breakage or peeling was not found on the coating film, and the film thickness was about 2 µm.

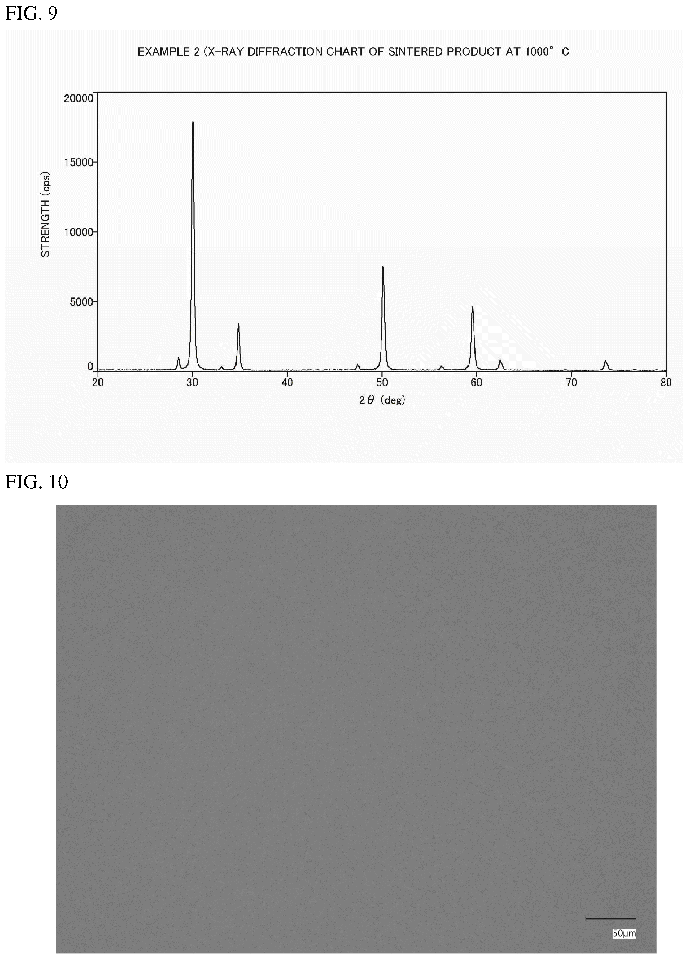

In a case where the coating film calcinated at 1000°C by X-ray diffraction was analyzed, as shown in FIG. 9, clear peaks of yttria-stabilized zirconia were observed at 2θ of 30, 35, 50, 60, 62, and 74.

### (Example 3)

6.24 g of zirconium (IV) n-butoxide, 1.56 g of an yttrium nitrate hexahydrate, 3.26 g of 2,4-pentanedione, 1.95 g of polyethylene glycol (average molecular weight: 600), 0.26 g of 60% nitric acid, 0.12 g of water, 14.04 g of ethanol, and 22.59 g of 1-butanol were blended in a 150 ml glass container and stirred for 3 hours using a magnetic stirrer, thereby preparing 50 g of a coating composition.

In Example 3, the amount of polyethylene glycol (average molecular weight: 600) added was 0.2 mol with respect to 1 mol of zirconium (IV) n-butoxide. The content of the polyethylene glycol in the coating composition was 3.90% by mass.

Separately, a coating film was prepared by coating a test piece as an object with the coating composition using an air spray and performing a heat treatment on the coating composition at 80°C for 30 minutes. FIG. 10 shows the results of observing the coating film after drying the coating film at 80°C with a microscope (optical microscope) at a magnification of 500 times. As shown in FIG. 10, a smooth coating film was obtained, and defects such as cracks were not found.

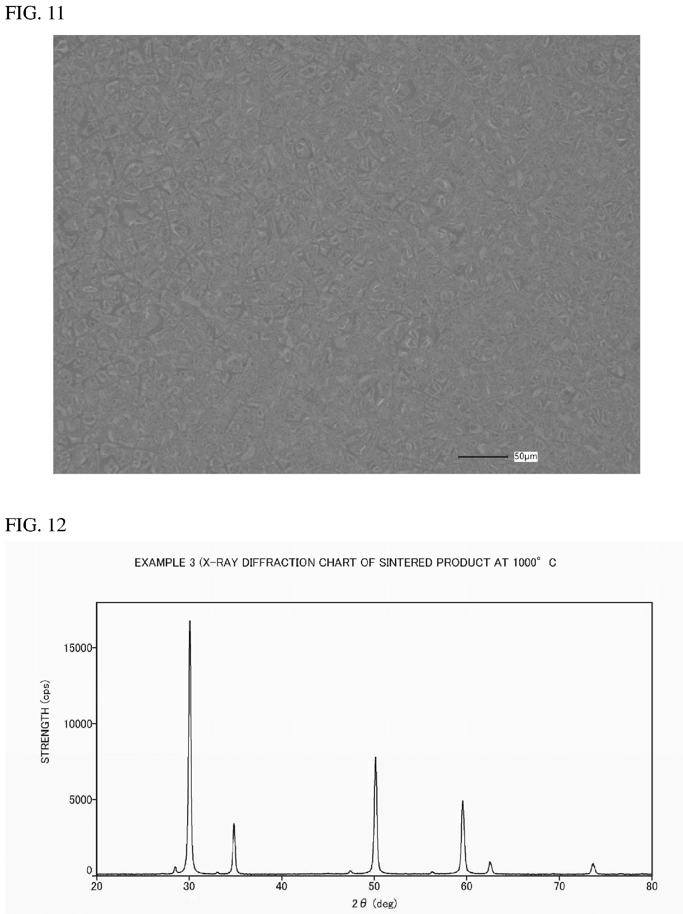

Further, the coating film was maintained at 1000°C for 60 minutes to prepare a coating film. FIG. 11 shows the results of observing the coating film after calcinating the coating film at 1000°C with a microscope (optical microscope) at a magnification of 500 times. As shown in FIG. 11, damage such as breakage or peeling was not found on the coating film, and the film thickness was about 2 µm.

In a case where the coating film calcinated at 1000°C by X-ray diffraction was analyzed, as shown in FIG. 12, clear peaks of yttria-stabilized zirconia were observed at 2θ of 30, 35, 50, 60, 62, and 74.

### (Example 4)

6.47 g of zirconium (IV) n-butoxide, 1.61 g of an yttrium nitrate hexahydrate, 3.38 g of 2,4-pentanedione, 0.17 g of polyethylene glycol (average molecular weight: 200), 0.27 g of 60% nitric acid, 0.12 g of water, 14.56 g of ethanol, and 23.42 g of 1-butanol were blended in a 150 ml glass container and stirred using a magnetic stirrer for 3 hours, thereby preparing 50 g of a coating composition.

In Example 4, the amount of polyethylene glycol (average molecular weight: 200) added was 0.05 mol with respect to 1 mol of zirconium (IV) n-butoxide. The content of the polyethylene glycol in the coating composition was 0.34% by mass.

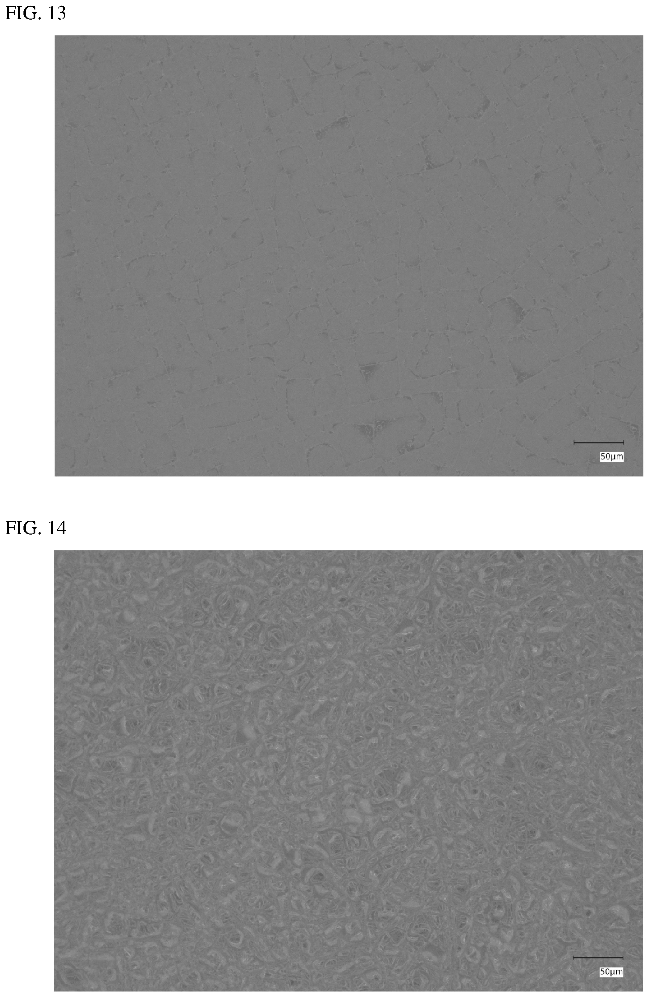

Separately, a coating film was prepared by coating a test piece as an object with the coating composition using an air spray and performing a heat treatment on the coating composition at 80°C for 30 minutes. FIG. 13 shows the results of observing the coating film after drying the coating film at 80°C with a microscope (optical microscope) at a magnification of 500 times. As shown in FIG. 13, a smooth coating film was obtained, and defects such as cracks were not found.

Further, the coating film was maintained at 1000°C for 60 minutes to prepare a coating film. FIG. 14 shows the results of observing the coating film after calcinating at 1000°C with a microscope (optical microscope) at a magnification of 500 times. As shown in FIG. 14, damage such as breakage or peeling was not found on the coating film, and the film thickness was about 2 µm.

### (Example 5)

6.45 g of zirconium (IV) n-butoxide, 1.61 g of an yttrium nitrate hexahydrate, 3.36 g of 2,4-pentanedione, 0.34 g of polyethylene glycol (average molecular weight: 200), 0.26 g of 60% nitric acid, 0.12 g of water, 14.51 g of ethanol, and 23.35 g of 1-butanol were blended in a 150 ml glass container and stirred for 3 hours using a magnetic stirrer, thereby preparing 50 g of a coating composition.

In Example 5, the amount of polyethylene glycol (average molecular weight: 200) added was 0.1 mol with respect to 1 mol of zirconium (IV) n-butoxide. The content of the polyethylene glycol in the coating composition was 0.67% by mass.

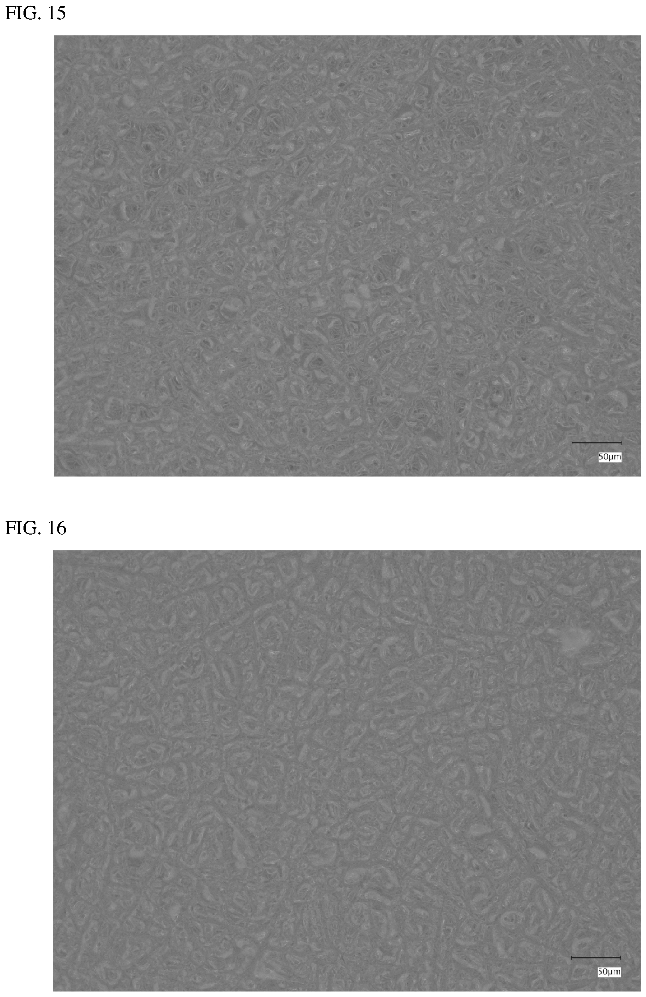

Separately, a coating film was prepared by coating a test piece as an object with the coating composition using an air spray and performing a heat treatment on the coating composition at 80°C for 30 minutes. FIG. 15 shows the results of observing the coating film after drying the coating film at 80°C with a microscope (optical microscope) at a magnification of 500 times. As shown in FIG. 15, a smooth coating film was obtained, and defects such as cracks were not found.

Further, the coating film was maintained at 1000°C for 60 minutes to prepare a coating film. FIG. 16 shows the results of observing the coating film after calcinating at 1000°C with a microscope (optical microscope) at a magnification of 500 times. As shown in FIG. 16, damage such as breakage or peeling was not found on the coating film, and the film thickness was about 2 µm.

### (Example 6)

6.36 g of zirconium (IV) n-butoxide, 1.59 g of an yttrium nitrate hexahydrate, 3.32 g of 2,4-pentanedione, 0.99 g of polyethylene glycol (average molecular weight: 200), 0.26 g of 60% nitric acid, 0.12 g of water, 14.32 g of ethanol, and 23.04 g of 1-butanol were blended in a 150 ml glass container and stirred for 3 hours using a magnetic stirrer, thereby preparing 50 g of a coating composition.

In Example 6, the amount of polyethylene glycol (average molecular weight: 200) added was 0.3 mol with respect to 1 mol of zirconium (IV) n-butoxide. The content of the polyethylene glycol in the coating composition was 1.99% by mass.

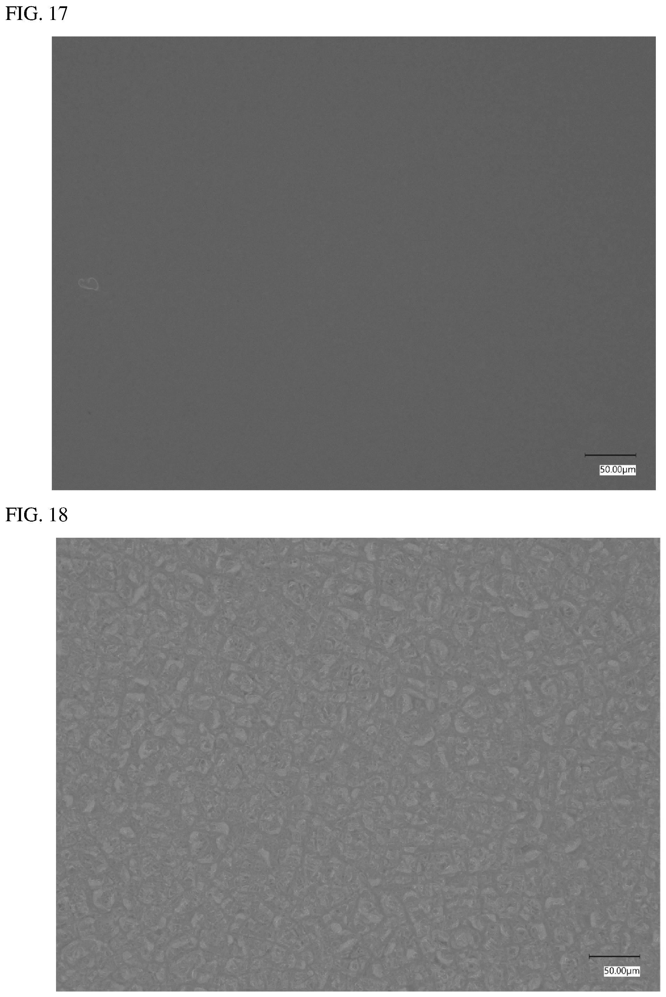

Separately, a coating film was prepared by coating a test piece as an object with the coating composition using an air spray and performing a heat treatment on the coating composition at 80°C for 30 minutes. FIG. 17 shows the results of observing the coating film after drying the coating film at 80°C with a microscope (optical microscope) at a magnification of 500 times. As shown in FIG. 17, a smooth coating film was obtained, and defects such as cracks were not found.

Further, the coating film was maintained at 1000°C for 60 minutes to prepare a coating film. FIG. 18 shows the results of observing the coating film after calcinating the coating film at 1000°C with a microscope (optical microscope) at a magnification of 500 times. As shown in FIG. 18, damage such as breakage or peeling was not found on the coating film, and the film thickness was about 2 µm.

### (Example 7)

6.28 g of zirconium (IV) n-butoxide, 1.57 g of an yttrium nitrate hexahydrate, 3.28 g of 2,4-pentanedione, 1.64 g of polyethylene glycol (average molecular weight: 200), 0.26 g of 60% nitric acid, 0.12 g of water, 14.13 g of ethanol, and 22.73 g of 1-butanol were blended in a 150 ml glass container and stirred for 3 hours using a magnetic stirrer, thereby preparing 50 g of a coating composition.

In Example 7, the amount of polyethylene glycol (average molecular weight: 200) added was 0.5 mol with respect to 1 mol of zirconium (IV) n-butoxide. The content of the polyethylene glycol in the coating composition was 3.27% by mass.

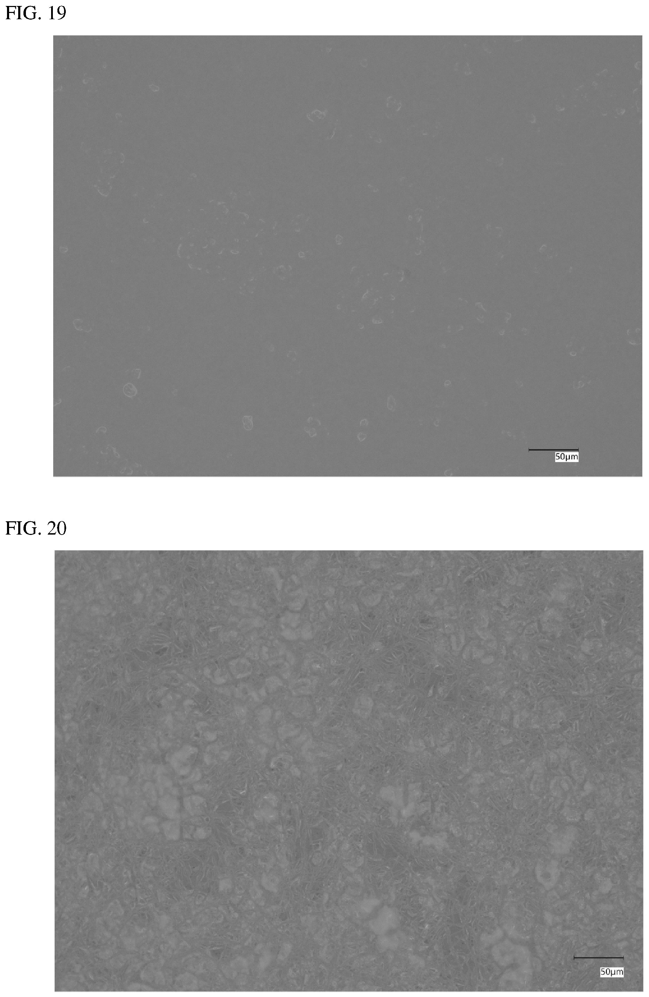

Separately, a coating film was prepared by coating a test piece as an object with the coating composition using an air spray and performing a heat treatment on the coating composition at 80°C for 30 minutes. FIG. 19 shows the results of observing the coating film after drying the coating film at 80°C with a microscope (optical microscope) at a magnification of 500 times. As shown in FIG. 19, a smooth coating film was obtained, and defects such as cracks were not found.

Further, the coating film was maintained at 1000°C for 60 minutes to prepare a coating film. FIG. 20 shows the results of observing the coating film after calcinating the coating film at 1000°C with a microscope (optical microscope) at a magnification of 500 times. As shown in FIG. 20, damage such as breakage or peeling was not found on the coating film, and the film thickness was about 2 µm.

### (Example 8)

6.32 g of zirconium (IV) n-butoxide, 1.58 g of an yttrium nitrate hexahydrate, 3.30 g of 2,4-pentanedione, 1.32 g of polypropylene glycol (average molecular weight: 400), 0.26 g of 60% nitric acid, 0.12 g of water, 14.23 g of ethanol, and 22.88 g of 1-butanol were blended in a 150 ml glass container and stirred for 3 hours using a magnetic stirrer, thereby preparing 50 g of a coating composition.

In Example 8, the amount of polypropylene glycol (average molecular weight: 400) added was 0.2 mol with respect to 1 mol of zirconium (IV) n-butoxide. The content of the polypropylene glycol in the coating composition was 2.64% by mass.

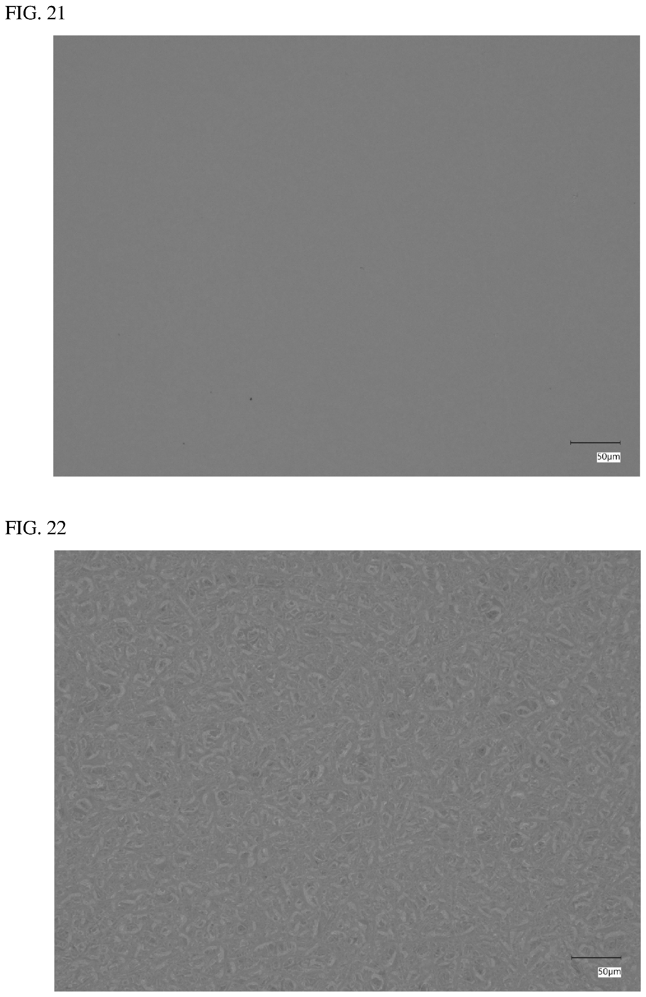

Separately, a coating film was prepared by coating a test piece as an object with the coating composition using an air spray and performing a heat treatment on the coating composition at 80°C for 30 minutes. FIG. 21 shows the results of observing the coating film after drying the coating film at 80°C with a microscope (optical microscope) at a magnification of 500 times. As shown in FIG. 21, a smooth coating film was obtained, and defects such as cracks were not found.

Further, the coating film was maintained at 1000°C for 60 minutes to prepare a coating film. FIG. 22 shows the results of observing the coating film after calcinating the coating film at 1000°C with a microscope (optical microscope) at a magnification of 500 times. As shown in FIG. 22, damage such as breakage or peeling was not found on the coating film, and the film thickness was about 2 µm.

### (Example 9)

6.41 g of zirconium (IV) n-butoxide, 1.60 g of an yttrium nitrate hexahydrate, 3.34 g of 2,4-pentanedione, 0.64 g of tripropylene glycol (molecular weight: 192), 0.26 g of 60% nitric acid, 0.12 g of water, 14.42 g of ethanol, and 23.20 g of 1-butanol were blended in a 150 ml glass container and stirred using a magnetic stirrer for 3 hours, thereby preparing 50 g of a coating composition.

In Example 9, the amount of tripropylene glycol (molecular weight: 192) added was 0.2 mol with respect to 1 mol of zirconium (IV) n-butoxide. The content of the tripropylene glycol in the coating composition was 1.28% by mass.

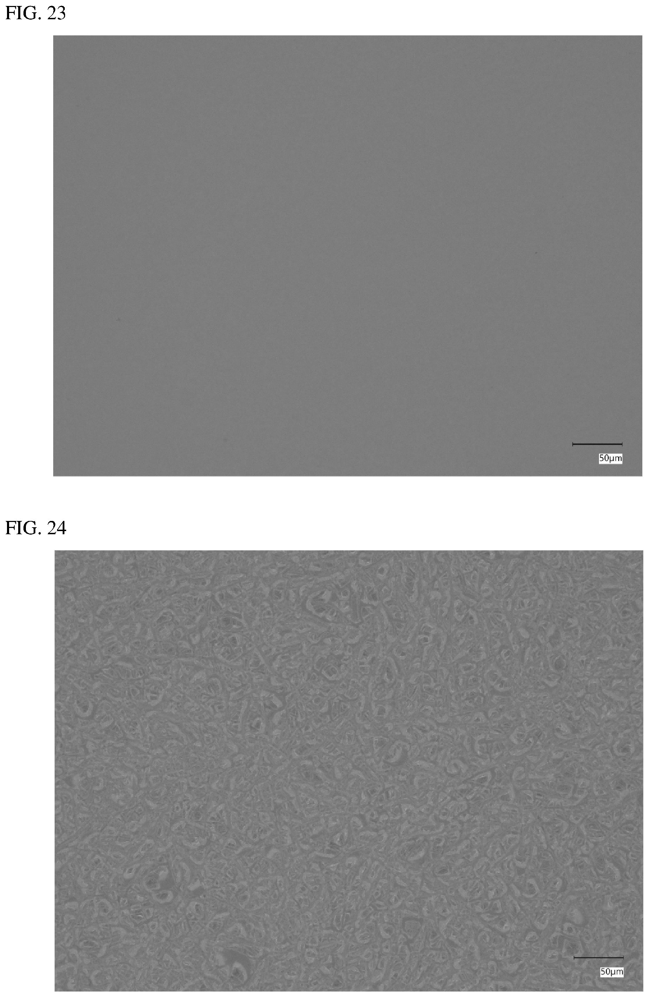

Separately, a coating film was prepared by coating a test piece as an object with the coating composition using an air spray and performing a heat treatment on the coating composition at 80°C for 30 minutes. FIG. 23 shows the results of observing the coating film after drying the coating film at 80°C with a microscope (optical microscope) at a magnification of 500 times. As shown in FIG. 23, a smooth coating film was obtained, and defects such as cracks were not found.

Further, the coating film was maintained at 1000°C for 60 minutes to prepare a coating film. FIG. 24 shows the results of observing the coating film after calcinating the coating film at 1000°C with a microscope (optical microscope) at a magnification of 500 times. As shown in FIG. 24, damage such as breakage or peeling was not found on the coating film, and the film thickness was about 2 µm.

### (Example 10)

6.20 g of zirconium (IV) n-butoxide, 1.55 g of an yttrium nitrate hexahydrate, 3.23 g of 2,4-pentanedione, 2.26 g of polypropylene glycol 700 (average molecular weight: 700), 0.25 g of 60% nitric acid, 0.11 g of water, 13.95 g of ethanol, and 22.44 g of 1-butanol were blended in a 150 ml glass container and stirred using a magnetic stirrer for 3 hours, thereby preparing 50 g of a coating composition.

In Example 10, the amount of polypropylene glycol 700 (average molecular weight: 700) added was 0.2 mol with respect to 1 mol of zirconium (IV) n-butoxide. The content of the polypropylene glycol 700 in the coating composition was 4.52% by mass.

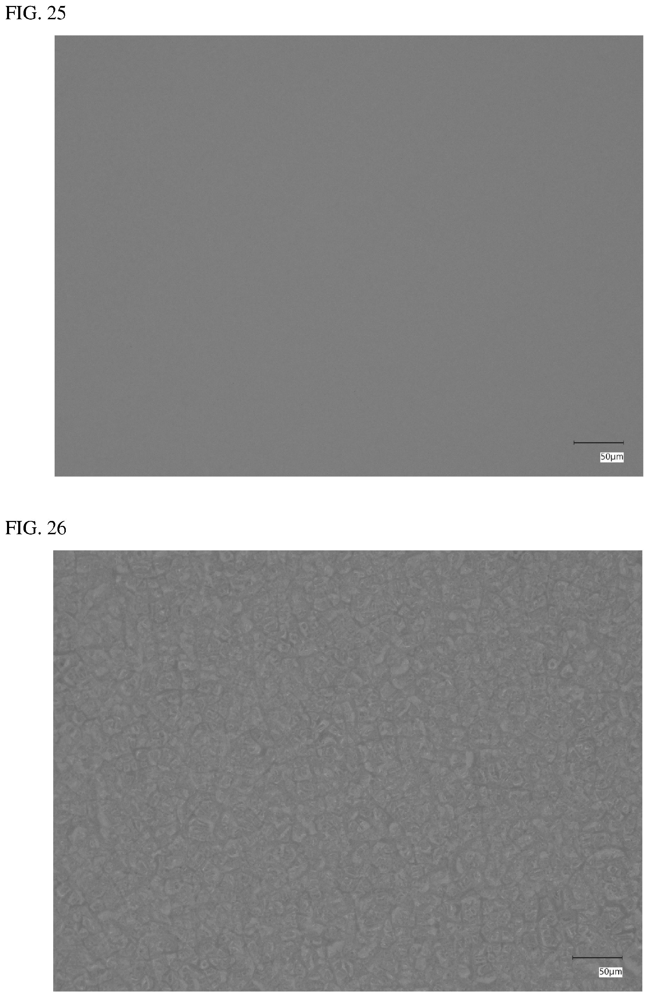

Separately, a coating film was prepared by coating a test piece as an object with the coating composition using an air spray and performing a heat treatment on the coating composition at 80°C for 30 minutes. FIG. 25 shows the results of observing the coating film after drying the coating film at 80°C with a microscope (optical microscope) at a magnification of 500 times. As shown in FIG. 25, a smooth coating film was obtained, and defects such as cracks were not found.

Further, the coating film was maintained at 1000°C for 60 minutes to prepare a coating film. FIG. 26 shows the results of observing the coating film after calcinating the coating film at 1000°C with a microscope (optical microscope) at a magnification of 500 times. As shown in FIG. 26, damage such as breakage or peeling was not found on the coating film, and the film thickness was about 2 µm.

### (Comparative Example 1)

Comparative Example 1 is an example in which polyalkylene glycol was not added.

6.49 g of zirconium (IV) n-butoxide, 1.62 g of an yttrium nitrate hexahydrate, 3.39 g of 2,4-pentanedione, 0.27 g of 60% nitric acid, 0.12 g of water, 23.50 g of 1-butanol, and 14.61 g of ethanol were blended in a 150 ml glass container and stirred for 3 hours using a magnetic stirrer, thereby preparing 50 g of a coating composition.

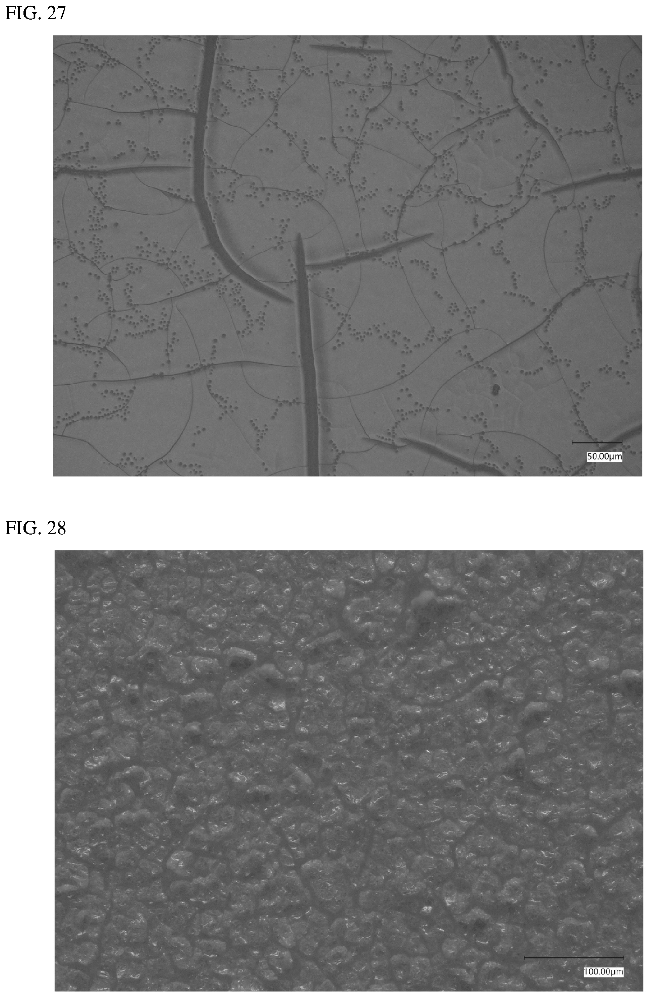

Separately, a coating film was prepared by coating a test piece as an object with the coating composition using an air spray and performing a heat treatment on the coating composition at 80°C for 30 minutes. FIG. 27 shows the results of observing the coating film after drying the coating film at 80°C with a microscope (optical microscope) at a magnification of 500 times. As shown in FIG. 27, cracks occurred on the surface of the coating film.

Further, the coating film was maintained at 1000°C for 60 minutes to prepare a coating film. FIG. 28 shows the results of observing the coating film after calcinating the coating film at 1000°C with a microscope (optical microscope) at a magnification of 500 times. As shown in FIG. 28, cracks occurred in the entire coating film, and the film thickness was about 2 µm.

### (Comparative Example 2)

Comparative Example 2 is an example in which the example of Patent Document 1 was reproduced.

An equal amount of a 0.5 M-1-propanol solution of zirconium (IV) n-propoxide and a 0.087 M-1-propanol solution of an yttrium nitrate hexahydrate were mixed, and a 0.5 M-1-propanol solution of 2,4-pentanedione was added to a 150 ml glass container so that zirconium was contained in a ratio of 2 (molar ratio) to 2,4-pentanedione, thereby preparing 50 g of a coating composition.

Separately, in a case where the coating composition was applied to the test piece as an object using an air spray and subjected to a heat treatment at 80°C for 30 minutes, the entire surface of the coating film was scabrous and had a rough appearance, and the coating film was easily peeled off by a simple touch with a finger. During drying the coating film at 80°C, peeling was visually confirmed in the coating film, and thus observation with a microscope and calcination at 1000°C were not carried out.

In Comparative Example 2, it was considered that hydrolysis of zirconium (IV) n-propoxide was insufficient, and a polycondensation reaction proceeded partially since the nitric acid as the catalyst and water were not added, the entire surface of the coating film was scabrous and had a rough appearance, and thus the coating film was easily peeled off.

### (Comparative Example 3)

Comparative Example 3 is an example in which polyvinylpyrrolidone was added with reference to Non Patent Document 2.

6.49 g of zirconium (IV) n-butoxide, 1.62 g of an yttrium nitrate hexahydrate, 3.39 g of 2,4-pentanedione, 0.65 g of polyvinylpyrrolidone (average molecular weight: 25,000), 0.27 g of 60% nitric acid, 0.12 g of water, 14.61 g of ethanol, and 22.85 g of 1-butanol were blended in a 150 ml glass container and stirred using a magnetic stirrer for 3 hours, thereby preparing 50 g of a coating composition.

In Comparative Example 3, since the average molecular weight of polyvinylpyrrolidone (average molecular weight: 25,000) was a large value of 25,000, the amount of polyvinylpyrrolidone added was 10% by mass of zirconium (IV) n-butoxide. The content of the polyvinylpyrrolidone in the coating composition was 1.30% by mass.

Separately, a coating film was prepared by coating a test piece as an object with the coating composition using an air spray and performing a heat treatment on the coating composition at 80°C for 30 minutes. FIG. 29 shows the results of observing the coating film after drying the coating film at 80°C with a microscope (optical microscope) at a magnification of 500 times. As shown in FIG. 29, cracks and the like were not found, but the coating film was slightly uneven.

Further, the coating film was maintained at 1000°C for 60 minutes to prepare a coating film. As a result of visually confirming the coating film after calcinating the coating film at 1000°C, the surface had significant unevenness and was rough. FIG. 30 shows the results of observation with a microscope (optical microscope) at a magnification of 500 times. As shown in FIG. 30, the coating film had a large number of convex surfaces, and the film thickness was about 2 µm. Since the surface had significant unevenness and was rough visually, X-ray diffraction analysis was not performed.

In addition to the combinations described in Examples 1 to 10, examples of the combination in which a suitable coating composition b2 and an yttria-stabilized zirconia coating film are obtained by using the zirconium alkoxide o, the yttrium compound p, the chelating compound q, the polyalkylene glycol r, the catalyst s, the water t, and the organic solvent u include the following combinations. However, the present invention is not limited to these combinations.
(a) zirconium (IV) n-butoxide, yttrium nitrate, 2,4-pentanedione, tetraethylene glycol, nitric acid, water, ethanol, and 1-butanol
(b) zirconium (IV) n-butoxide, yttrium nitrate, 2,4-pentanedione, pentaethylene glycol, nitric acid, water, ethanol, and 1-butanol
(c) zirconium (IV) n-butoxide, yttrium nitrate, 2,4-pentanedione, polyethylene glycol (average molecular weight: 1000), nitric acid, water, ethanol, and 1-butanol
(d) zirconium (IV) n-butoxide, yttrium nitrate, 2,4-pentanedione, tetrapropylene glycol, nitric acid, water, ethanol, and 1-butanol
(e) zirconium (IV) n-butoxide, yttrium nitrate, 2,4-pentanedione, polypropylene glycol (average molecular weight: 1000), nitric acid, water, ethanol, and 1-butanol
(f) zirconium (IV) n-butoxide, yttrium nitrate, 3,5-heptanedione, polyethylene glycol (average molecular weight: 200), nitric acid, water, ethanol, and 1-butanol
(g) zirconium (IV) n-propoxide, yttrium nitrate, 2,4-pentanedione, polyethylene glycol (average molecular weight: 200), nitric acid, water, ethanol, and 1-propanol
(h) zirconium (IV) n-propoxide, yttrium nitrate, 2,4-pentanedione, polyethylene glycol (average molecular weight: 400), nitric acid, water, ethanol, and 1-propanol
(i) zirconium (IV) n-propoxide, yttrium nitrate, 2,4-pentanedione, polyethylene glycol (average molecular weight: 600), nitric acid, water, ethanol, and 1-propanol
(j) zirconium (IV) n-butoxide, yttrium chloride, 2,4-heptanedione, polyethylene glycol (average molecular weight: 200), hydrochloric acid, water, ethanol, and 1-butanol
(k) zirconium (IV) n-butoxide, yttrium sulfate, 2,4-heptanedione, polyethylene glycol (average molecular weight: 200), sulfuric acid, water, ethanol, and 1-butanol
(l) zirconium (IV) n-butoxide, yttrium acetate, 2,4-heptanedione, polyethylene glycol (average molecular weight: 200), acetic acid, water, ethanol, and 1-butanol

### [Usage form of yttria-stabilized zirconia layer]

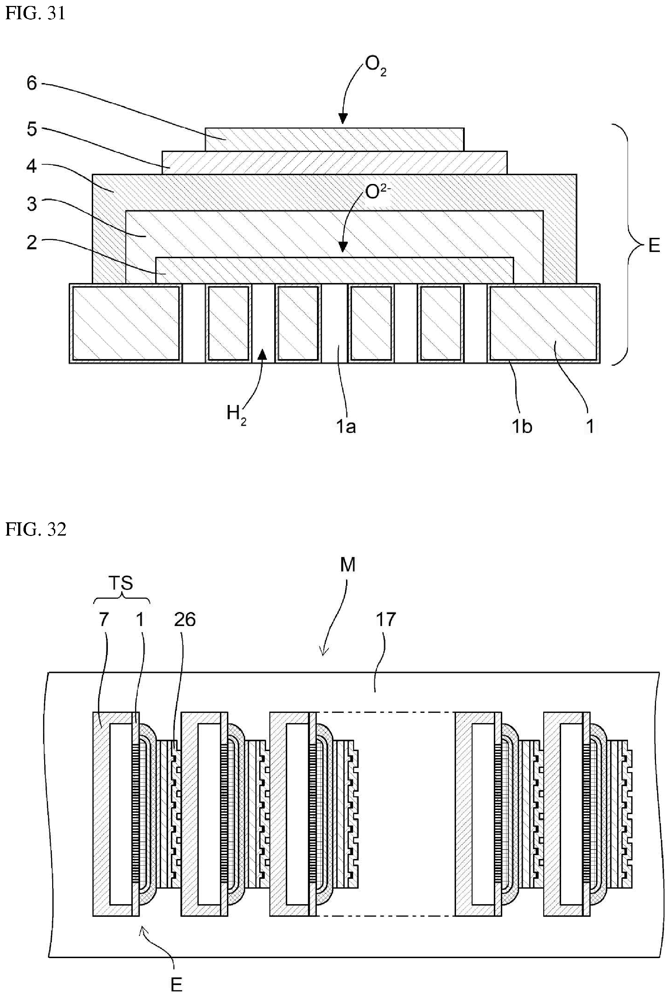

Hereinafter, a solid oxide fuel cell that is configured to include an electrochemical element E, this electrochemical element E being formed by using the yttria-stabilized zirconia layer described so far will be described with reference to FIGS. 31 to 34.

The electrochemical element E is used, for example, as a constituent element of a solid oxide fuel cell that generates power by receiving a supply of a fuel gas containing hydrogen and air to cause a power generation reaction to occur.

Further, in the following description related to the electrochemical element E, in a case where a positional relationship between layers is represented, a reference layer in a case of positional notation may be referred to as the electrolyte layer 4, a side of a counter electrode layer 6 as viewed from the electrolyte layer 4 may be referred to as "upper" or "upper side" (upper side in FIG. 31), and a side of the electrode layer 2 may be referred to as "lower" or "lower side". In addition, a surface of a metal substrate 1 on which the electrode layer 2 is formed (upper side in FIG. 31) may be referred to as "front side", and a surface on the opposite side (lower side in FIG. 31) may be referred to as "back side".

### (Electrochemical element)

As shown in FIG. 31, the electrochemical element E includes the metal substrate 1 (an example of the metal support), the electrode layer 2 formed on the metal substrate 1, the interlayer 3 formed on the electrode layer 2, and the electrolyte layer 4 formed on the interlayer 3. Further, the electrochemical element E further includes a reaction preventing layer 5 formed on the electrolyte layer 4 and a counter electrode layer 6 formed on the reaction preventing layer 5. That is, the counter electrode layer 6 is formed over the electrolyte layer 4, and the reaction preventing layer 5 is formed between the electrolyte layer 4 and the counter electrode layer 6. The electrode layer 2 and the counter electrode layer 6 are porous, and the electrolyte layer 4 is dense.

As described above, regarding each layer constituting the electrochemical element E, the main elements thereof are the electrolyte layer 4, the electrode layer 2 and the counter electrode layer 6 which are provided to sandwich the electrolyte layer 4, and these three layers can be provided to operate as the electrochemical element E.

### (Metal Substrate)

The metal substrate 1 plays a role of a support that supports the electrode layer 2, the interlayer 3, the electrolyte layer 4, and the like to maintain the strength of the electrochemical element E. Although the plate-shaped metal substrate 1 is used as this metal substrate, other shapes such as a box shape, a cylindrical shape, and a disk shape can also be used as the metal support.

Further, the metal substrate 1 may have the strength enough to form the electrochemical element E as a support, and for example, the thickness thereof is, for example, about 0.1 mm to 2 mm, preferably about 0.1 mm to 1 mm, and more preferably about 0.1 mm to 0.5 mm.

The metal substrate 1 has a plurality of through-holes 1a provided to penetrate a surface of the front side and a surface of the back side. For example, the through-hole 1a can be provided in the metal substrate 1 by mechanical, chemical, or optical perforation processing. The through-hole 1a has a function of allowing a gas to permeate from the surface of the back side to the surface of the front side of the metal substrate 1. In order to impart gas permeability to the metal substrate 1, it is also possible to use a porous metal. For example, for the metal substrate 1, a calcinated metal, a foamed metal, or the like can also be used. As a metal substrate material, a ferrite stainless steel material (an example of Fe-Cr alloy) is used. Further, as shown in FIG. 31, a coating layer 1b may be formed on an outer surface (including surfaces of the through-holes 1a) of this metal substrate 1. In addition, this coating layer 1b can be a metal oxide layer. For example, a Fe-Cr alloy can be subjected to a Co coating treatment, and can be then subjected to an oxidation treatment to form a metal oxide layer.

In a case where an Fe-Cr-based alloy is used as the material of the metal substrate 1, the thermal expansion coefficient of this material is close to that of yttria-stabilized zirconia (YSZ) or gadolinium-doped ceria (GDC, also referred to as CGO) used as the material of the electrode layer 2 or the electrolyte layer 4. As a result, even in a case where a temperature cycle of a low temperature and a high temperature is repeated, the electrochemical element E is less likely to be damaged. Accordingly, an electrochemical element E having excellent long-term durability can be obtained, which is preferable.

### (Electrode Layer)

As shown in FIG. 31, the electrode layer 2 can be formed in a state of a thin layer in a region which is on the surface of the front side of the metal substrate 1 and is larger than a region where the through-holes 1a are provided. In a case where the electrode layer 2 is formed in a state of a thin layer, the thickness thereof can be, for example, about 1 µm to 100 µm and preferably 5 µm to 50 µm. With such a thickness, it is possible to secure sufficient electrode performance while reducing the amount of expensive electrode layer material used to reduce costs. The entire region where the through-holes 1a are provided is covered with the electrode layer 2. That is, the through-hole 1a is formed inside a region of the metal substrate 1 where the electrode layer 2 is formed. In other words, all the through-holes 1a are provided so as to face the electrode layer 2.

As a material for the electrode layer 2, for example, a composite material such as NiO-GDC, Ni-GDC, NiO-YSZ, Ni-YSZ, CuO-CeO₂, and Cu-CeO₂ can be used. In these examples, YSZ, GDC, and CeO₂ can be referred to as a composite aggregate. It is preferable that the electrode layer 2 is formed by a low-temperature calcination method (for example, a wet method using a calcination treatment in a low-temperature range that does not carry out a calcination treatment in a high-temperature range exceeding 1100°C), a spray coating method (a thermal spraying method, an aerosol deposition method, an aerosol gas deposition method, a powder jet deposition method, a particle jet deposition method, a cold spraying method, or the like), a PVD method (a sputtering method, a pulsed laser deposition method, or the like), a CVD method, or the like. These processes that can be used in a low-temperature range provide a satisfactory electrode layer 2 without using, for example, calcination in a high temperature range exceeding 1100°C. Therefore, the element interdiffusion between the metal substrate 1 and the electrode layer 2 can be suppressed without damaging the metal substrate 1, and an electrochemical element E having excellent durability can be obtained, which is preferable. Further, it is more preferable to use the low-temperature calcination method because the raw material can be easily handled.

The electrode layer 2 has a plurality of pores inside and on the surface thereof to have gas permeability. That is, the electrode layer 2 is formed as a porous layer. For example, the electrode layer 2 is formed such that the denseness thereof is 30% or greater and less than 80%. As a size of the pore, a size suitable for allowing an electrochemical reaction to proceed smoothly during the reaction can be appropriately selected. Moreover, the denseness is a proportion of a material constituting a layer in a space, can be expressed as (1 - porosity), and is equivalent to a relative density.

### (Interlayer)

As shown in FIG. 31, the interlayer 3 can be formed as a thin layer on the electrode layer 2 in a state of covering the electrode layer 2. In a case where the interlayer 3 is formed in a state of a thin layer, the thickness thereof can be, for example, about 1 µm to 100 µm, preferably about 2 µm to 50 µm, and more preferably about 4 µm to 25 µm. In a case where the thickness is set as described above, a sufficient performance can be ensured while reducing a cost by reducing the amount of an expensive material used for the interlayer. As a material of the interlayer 3, for example, yttria-stabilized zirconia (YSZ), scandia-stabilized zirconia (SSZ), gadolinium-doped ceria (GDC), yttrium-doped ceria (YDC), samarium-doped ceria (SDC), or the like can be used. In particular, ceria-based ceramics are suitably used.

The interlayer 3 is preferably formed by a low-temperature calcination method (for example, a wet method using a calcination treatment in a low-temperature range without performing a calcination treatment in a high-temperature range of higher than 1100°C), a spray coating method (a method such as a thermal spraying method, an aerosol deposition method, an aerosol gas deposition method, a powder jet deposition method, a particle jet deposition method, and a cold spraying method), a PVD method (a sputtering method, a pulsed laser deposition method, or the like), a CVD method, or the like. By performing these film formation processes that can be used in a low-temperature range, the interlayer 3 can be obtained without calcination in a high-temperature range of higher than 1100°C, for example. For this reason, the element interdiffusion between the metal substrate 1 and the electrode layer 2 can be prevented without damaging the metal substrate 1, and an electrochemical element E having excellent durability can be achieved. Moreover, it is more preferable to use the low-temperature calcination method from the viewpoint that the raw materials can be easily handled.

The interlayer 3 preferably has oxygen ion (oxide ion) conductivity. In addition, the interlayer 3 more preferably has mixed conductivity of an oxygen ion (oxide ion) and an electron. The interlayer 3 having these properties is suitable for application to the electrochemical element E.

### (Electrolyte layer)

The electrolyte layer 4 is formed as a thin layer on the interlayer 3 in a state of covering the electrode layer 2 and the interlayer 3, as shown in FIG. 31. The electrolyte layer 4 can also be formed as a thin film having a thickness of 10 µm or smaller. Specifically, the electrolyte layer 4 is provided over (provided on both) the interlayer 3 and the metal substrate 1. By configuring the electrochemical element E as described above and bonding the electrolyte layer 4 to the metal substrate 1, the entire electrochemical element E can have excellent robustness.

In addition, the electrolyte layer 4 is provided in a region which is on the surface of the front side of the metal substrate 1 and is larger than a region where the through-holes 1a are provided. That is, the through-holes 1a are formed inside a region of the metal substrate 1 where the electrolyte layer 4 is formed.

Further, gas leakage from the electrode layer 2 and the interlayer 3 can be suppressed at the periphery of the electrolyte layer 4. That is, in a case where the electrochemical element E is used as a constituent element of SOFC, a gas is supplied from the back side of the metal substrate 1 to the electrode layer 2 through the through-holes 1a during the operation of SOFC. At a site where the electrolyte layer 4 is in contact with the metal substrate 1, gas leakage can be suppressed without providing a separate member such as a gasket. Moreover, in the present embodiment, the electrolyte layer 4 covers the entire periphery of the electrode layer 2, but a configuration in which the electrolyte layer 4 is provided on an upper part of the electrode layer 2 and the interlayer 3, and a gasket or the like is provided at the periphery may be employed.

As a material of the electrolyte layer 4, yttria-stabilized zirconia (YSZ), scandia-stabilized zirconia (SSZ), gadolinium-doped ceria (GDC), yttrium-doped ceria (YDC), samarium-doped ceria (SDC), strontium magnesium added lanthanum gallate (LSGM), or the like can be used. In particular, zirconia-based ceramics are preferably used. In a case where the electrolyte layer 4 is made of the zirconia-based ceramics, an operating temperature of SOFC using the electrochemical element E can be made higher than that in a case of ceria-based ceramics. For example, in a case where the electrochemical element E is used for SOFC, and a system configuration in which a material, such as YSZ, which can exhibit a high electrolyte performance even in a high-temperature range of about 650°C or higher is used as the material for the electrolyte layer 4, a hydrocarbon-based raw fuel such as a city gas and LPG is used as a raw fuel of the system, and the raw fuel is steam-reformed to become an anode gas of SOFC is employed, it is possible to construct a highly efficient SOFC system in which heat generated in a cell stack of SOFC is used for reforming the raw fuel gas.

The electrolyte layer 4 is preferably formed by a low-temperature calcination method (a wet method using a calcination treatment in a low-temperature range without performing a calcination treatment in a high-temperature range of higher than 1100°C), and for example, the electrolyte layer 4 can be formed by performing an air spray method, a bar coat method, a dispenser method, a brush coating, and a spatula coating with a liquid composition, and performing a calcination treatment in a temperature range of 1100°C or lower. In addition, the electrolyte layer 4 is preferably formed by a spray coating method (a method such as a thermal spraying method, an aerosol deposition method, an aerosol gas deposition method, a powder jet deposition method, a particle jet deposition method, and a cold spraying method), a PVD method (a sputtering method, a pulsed laser deposition method, or the like), a CVD method, or the like. By performing these film formation processes that can be used in a low-temperature range, an electrolyte layer 4 that is dense and has high airtightness and gas barrier properties can be obtained without calcination in a high-temperature range, for example, higher than 1100°C. Therefore, the damage of the metal substrate 1 can be prevented, and the element interdiffusion between the metal substrate 1 and the electrode layer 2 can be prevented, and thus the electrochemical element E excellent in a performance and durability can be realized. In particular, it is preferable to use the low-temperature calcination method, the spray coating method, or the like from the viewpoint that a low-cost element can be realized. Further, it is more preferable to use the low-temperature calcination method or the spray coating method from the viewpoint that the electrolyte layer 4 which is dense and has high airtightness and gas barrier properties can be easily obtained in a low-temperature range.

The electrolyte layer 4 is densely configured to shield gas leakage of an anode gas and a cathode gas and to exhibit high ionic conductivity. A denseness of the electrolyte layer 4 is preferably 90% or greater, more preferably 95% or greater, and still more preferably 98% or greater. In a case where the electrolyte layer 4 is a uniform layer, the denseness thereof is preferably 95% or greater and more preferably 98% or greater. Moreover, when the electrolyte layer 4 is formed in a form of a plurality of layers, at least some of these layers preferably include a layer (a dense electrolyte layer) having a denseness of 98% or greater, and more preferably include a layer (a dense electrolyte layer) having a denseness of 99% or greater. This is because when such a dense electrolyte layer is included in a part of the electrolyte layer 4, the electrolyte layer 4 that is dense and has high airtightness and gas barrier properties can be easily formed even in a case where the electrolyte layer 4 is formed in a form of a plurality of layers.

### (Reaction Preventing Layer)

The reaction preventing layer 5 can be formed as a thin layer on the electrolyte layer 4. In a case where the reaction preventing layer 5 is formed in state of a thin layer, the thickness thereof can be, for example, about 1 µm to 100 µm, preferably about 2 µm to 50 µm, and more preferably about 4 µm to 25 µm. In a case where the thickness is set as described above, a sufficient performance can be ensured while reducing a cost by reducing the amount of an expensive material used for the reaction preventing layer. As a material of the reaction preventing layer 5, any material that can prevent a reaction between a component of the electrolyte layer 4 and a component of the counter electrode layer 6 may be used. For example, a ceria-based material or the like is used. As a result of introducing the reaction preventing layer 5 between the electrolyte layer 4 and the counter electrode layer 6, a reaction between constituent materials of the counter electrode layer 6 and constituent materials of the electrolyte layer 4 can be effectively suppressed, and long-term stability of the performance of the electrochemical element E can be improved. Forming the reaction preventing layer 5 by appropriately using a method in which the reaction preventing layer 5 can be formed at a treatment temperature of 1100°C or lower is preferable since the damage of the metal substrate 1 can be prevented, the element interdiffusion between the metal substrate 1 and the electrode layer 2 can be prevented, and the electrochemical element E excellent in a performance and durability can be achieved. For example, the formation can be performed by appropriately using a low-temperature calcination method (for example, a wet method using a calcination treatment in a low-temperature range without performing a calcination treatment in a high-temperature range of higher than 1100°C), a spray coating method (a method such as a thermal spraying method, an aerosol deposition method, an aerosol gas deposition method, a powder jet deposition method, a particle jet deposition method, and a cold spraying method), a PVD method (a sputtering method, a pulsed laser deposition method, or the like), a CVD method, or the like. In particular, it is preferable to use the low-temperature calcination method, the spray coating method, or the like from the viewpoint that a low-cost element can be realized. Further, it is more preferable to use the low-temperature calcination method because the raw material can be easily handled.

### (Counter Electrode Layer)

The counter electrode layer 6 can be formed as a thin layer on the electrolyte layer 4 or the reaction preventing layer 5. In a case where the counter electrode layer 6 is formed in a state of a thin layer, the thickness thereof can be, for example, about 1 µm to 100 µm and preferably 5 µm to 50 µm. With such a thickness, it is possible to secure sufficient electrode performance while reducing the amount of expensive counter electrode layer material used to reduce costs. As a material of the counter electrode layer 6, for example, a composite oxide such as lanthanum strontium cobaltite ferrite (LSCF) or lanthanum strontium manganate (LSM), a ceria-based oxide, or a mixture thereof can be used. In particular, it is preferable that the counter electrode layer 6 contains a perovskite-type oxide containing two or more elements selected from the group consisting of La, Sr, Sm, Mn, Co, and Fe. The counter electrode layer 6 formed of the above materials functions as a cathode.

Further, forming the counter electrode layer 6 by appropriately using a method by which the counter electrode layer 6 can be formed at a treatment temperature of 1100°C or lower is preferable since the damage of the metal substrate 1 can be suppressed, the element interdiffusion between the metal substrate 1 and the electrode layer 2 can be suppressed, and the electrochemical element E excellent in a performance and durability can be achieved. For example, the formation can be performed by appropriately using a low-temperature calcination method (for example, a wet method using a calcination treatment in a low-temperature range without performing a calcination treatment in a high-temperature range of higher than 1100°C), a spray coating method (a method such as a thermal spraying method, an aerosol deposition method, an aerosol gas deposition method, a powder jet deposition method, a particle jet deposition method, and a cold spraying method), a PVD method (a sputtering method, a pulsed laser deposition method, or the like), a CVD method, or the like. In particular, it is preferable to use the low-temperature calcination method, the spray coating method, or the like from the viewpoint that a low-cost element can be realized. Further, it is more preferable to use the low-temperature calcination method because the raw material can be easily handled.

As described above, in the electrochemical element E according to the present invention, an yttria-stabilized zirconia (YSZ) layer can be employed as the electrolyte layer 4. The electrolyte layer 4 can be formed by using the coating composition b2 according to the present invention because of the advantage of obtaining the electrolyte layer 4 that is dense and has high airtightness and gas barrier properties.

As another embodiment, an yttria-stabilized zirconia layer obtained by curing the coating composition b2 of the present application can be used as a part of the electrode layer 2 and the interlayer 3 (partial constituent material of a composite material). Further, another interlayer (not shown) may be inserted between the electrolyte layer 4 and the reaction preventing layer 5, and the yttria-stabilized zirconia layer obtained by curing the coating composition b2 of the present application can also be used as a part of this interlayer.

### (Operation as Solid Oxide Fuel Cell)

As a result of configuring the electrochemical element E as described above, the electrochemical element E can be used as a fuel cell of a solid oxide fuel cell. For example, a reduction gas (typically a fuel gas containing hydrogen) is supplied to the electrode layer 2 from the surface of the back side of the metal substrate 1 through the through-holes 1a, and an oxidization gas (typically air containing oxygen) is supplied to the counter electrode layer 6 serving as a counter electrode of the electrode layer 2 to operate the electrochemical element E at a temperature of, for example, 600°C or higher and 850°C or lower. Then, oxygen O₂ contained in the air in the counter electrode layer 6 reacts with an electron e- to generate an oxygen ion O²⁻. The oxygen ion O²⁻ moves to the electrode layer 2 through the electrolyte layer 4 (see FIG. 31). In the electrode layer 2, hydrogen H₂ contained in the supplied fuel gas reacts with an oxygen ion O²⁻ to generate water H₂O and an electron e⁻. As a result of the above reaction, an electromotive force is generated between the electrode layer 2 and the counter electrode layer 6. In this case, the electrode layer 2 functions as a fuel electrode (anode) of SOFC, and the counter electrode layer 6 functions as an air electrode (cathode).

### (Method for Producing Electrochemical Element)

Next, a method for producing the electrochemical element E according to the present embodiment will be described.

In the following description, an example of forming an yttria-stabilized zirconia layer on a part of the electrode layer 2 and the interlayer 3 and further on the electrolyte layer 4 by using the coating composition b2 according to the present invention will be mainly described.

### (Metal Substrate Preparation Step)

At a metal substrate preparation step, a plate material made of a Fe-Cr alloy having a predetermined shape can be prepared, and a large number of the through-holes 1a can be formed at predetermined positions of the plate material by laser processing or the like. Further, this plate material may be subjected to a Co-plating treatment, and after the plating treatment, an oxidation treatment may be performed to form a metal oxide layer containing Co. This metal oxide layer will be formed as a metal oxide layer 1b (coating layer) in an electrode layer forming step described below.

### (Electrode Layer Forming Step)

In an electrode layer forming step, the electrode layer 2 is formed in a state of a thin film in a region wider than the region where the through-holes 1a are provided on the front surface of the metal substrate 1 obtained at the metal substrate preparation step. The through-holes 1a of the metal substrate 1 can be provided by laser processing or the like. The electrode layer 2 can be formed by appropriately using a low-temperature calcination method (a wet method with a calcination treatment in a low-temperature range of 1100°C or lower), a spray coating method (a method such as a thermal spraying method, an aerosol deposition method, an aerosol gas deposition method, a powder jet deposition method, a particle jet deposition method, and a cold spraying method), a PVD method (a sputtering method, a pulsed laser deposition method, or the like), or the like. Regardless of which method is used, it is desirable to carry out a method at a temperature of 1100°C or lower in order to prevent deterioration of the metal substrate 1.

In a case where the electrode layer forming step is carried out by a low-temperature calcination method, specifically, material powder and a solvent (dispersion medium) are mixed to prepare material paste, and the material paste is applied to the front surface of the metal substrate 1. Here, the coating composition b2 according to the present invention can be used as a part of this material paste.

Further, the electrode layer 2 is compression-molded (electrode layer smoothing step) and calcinated at 1100°C or lower (electrode layer calcination step). The compression molding of the electrode layer 2 can be carried out by, for example, cold isostatic pressing (CIP, cold hydrostatic pressure) molding, roll pressure molding, rubber isostatic pressing (RIP) molding, or the like. The electrode layer 2 is suitably calcinated at a temperature of 800°C or higher and 1100°C or lower. The order of the electrode layer smoothing step and the electrode layer calcination step can be exchanged.

Further, in a case of forming the electrochemical element E including the interlayer 3, the electrode layer smoothing step or the electrode layer calcination step is not carried out, or the electrode layer smoothing step or the electrode layer calcination step can be included in an interlayer smoothing step or an interlayer calcination step described below.

The electrode layer smoothing step can also be carried out by performing a lap forming or leveling treatment, a surface cutting and polishing treatment, or the like.

### (Diffusion Preventing Layer Forming Step)

A diffusion preventing layer is the metal oxide layer 1b (coating layer) formed on the surface of the metal substrate 1 during a calcination step at the above-described electrode layer forming step. In a case where the above-described calcination step includes a calcination step carried out based on a condition of setting a calcination atmosphere to an atmosphere with a low oxygen partial pressure, the effect of suppressing mutual diffusion of elements is high, and a high-quality metal oxide layer 1b having a low resistance value is formed, which is preferable. Including a case where the electrode layer forming step is carried out by a coating method without calcination, another diffusion preventing layer forming step may be included. For example, at the other diffusion preventing layer forming step, the metal substrate 1 is coated with Co thereon, and an oxidation treatment is then carried out to form the metal oxide layer 1b. Alternatively, for example, at the other diffusion preventing layer forming step, an intervening layer formed on the metal substrate 1 can be coated with Co, and the oxidation treatment can be then carried out to form the metal oxide layer 1b.

In both cases, it is desirable to carry out the treatment at a treatment temperature of 1100°C or lower, which can prevent damage to the metal substrate 1. In addition, the metal oxide layer 1b (diffusion preventing layer) may be formed on the surface of the metal substrate 1 during the calcination step at an interlayer forming step described below.

### (Interlayer Forming Step)

At an interlayer forming step, the interlayer 3 is formed as a thin layer on the electrode layer 2 in the form of covering the electrode layer 2. The interlayer 3 can be formed by appropriately using a low-temperature calcination method (a wet method with a calcination treatment in a low-temperature range of 1100°C or lower), a spray coating method (a method such as a thermal spraying method, an aerosol deposition method, an aerosol gas deposition method, a powder jet deposition method, a particle jet deposition method, and a cold spraying method), a PVD method (a sputtering method, a pulsed laser deposition method, or the like), a CVD method, or the like. Regardless of which method is used, it is desirable to carry out a method at a temperature of 1100°C or lower in order to prevent deterioration of the metal substrate 1.

In a case where the interlayer forming step is carried out by the low-temperature calcination method, it is specifically performed as in the following example. First, material powder of the interlayer 3 and a solvent (dispersion medium) are mixed to prepare material paste, and the material paste is applied to the front surface of the metal substrate 1.

As a material of the interlayer 3, ceria-based ceramics such as gadolinium-doped ceria (GDC), yttrium-doped ceria (YDC), and samarium-doped ceria (SDC) are suitably used. Here, in a case where the coating composition b2 according to the present invention is contained in this material paste in advance, it can be used as a part of the interlayer 3 made of a composite material.

Further, the interlayer 3 is compression-molded (interlayer smoothing step) and calcinated at 1100°C or lower (interlayer calcination step). The compression molding of the interlayer 3 can be carried out by, for example, cold isostatic pressing (CIP, cold hydrostatic pressure) molding, roll pressure molding, rubber isostatic pressing (RIP) molding, or the like. Further, the interlayer 3 is suitably calcinated at a temperature of 800°C or higher and 1100°C or lower. The reason such a temperature is employed is that a high-strength interlayer 3 can be formed while preventing damage and deterioration of the metal substrate 1. In addition, the interlayer 3 is preferably calcinated at 1050°C or lower and still more preferably calcinated at 1000°C or lower. This is because the electrochemical element E can be formed while further preventing damage and deterioration of the metal substrate 1 as the calcination temperature of the interlayer 3 is lowered. The order of the interlayer smoothing step and the interlayer calcination step can be exchanged. Further, the interlayer smoothing step can also be carried out by performing a lap forming or leveling treatment, a surface cutting treatment and polishing treatment, or the like.

### (Electrolyte Layer Forming Step)

At an electrolyte layer forming step, the electrolyte layer 4 is formed as a thin layer on the interlayer 3 in a state of covering the electrode layer 2 and the interlayer 3. The electrolyte layer 4 can also be formed as a thin film having a thickness of 10 µm or less. The electrolyte layer 4 is preferably formed by the low-temperature calcination method (a wet method of performing a calcination treatment in a low-temperature range of 1100°C or lower) as described above, and for example, the electrolyte layer 4 can be formed by performing an air spray method, a bar coat method, a dispenser method, a brush coating, and a spatula coating with the coating composition b2 according to the present invention, and performing a calcination treatment in a temperature range of 1100°C or lower. In addition, it is possible to use methods such as a spray coating method (a method such as a thermal spraying method, an aerosol deposition method, an aerosol gas deposition method, a powder jet deposition method, a particle jet deposition method, and a cold spraying method), a PVD method (a sputtering method, a pulsed laser deposition method, or the like), and a CVD method. Regardless of which method is used, it is desirable to carry out a method at a temperature of 1100°C or lower in order to prevent deterioration of the metal substrate 1.

In order to form a high-quality electrolyte layer 4 that is dense and has high airtightness and gas barrier properties in a temperature range of 1100°C or lower, it is desirable that the coating composition b2 according to the present invention is used to form the electrolyte layer 4 in the electrolyte layer forming step by a low-temperature calcination method. In that case, a material of the electrolyte layer 4 can be applied onto an underlying layer by an air spray method or the like and can be subjected to a calcination treatment at a temperature of 1100°C or lower to form the electrolyte layer 4.

### (Reaction Preventing Layer Forming Step)

At the reaction preventing layer forming step, the reaction preventing layer 5 is formed on the electrolyte layer 4 as a thin layer. The reaction preventing layer 5 can be formed by appropriately using a low-temperature calcination method, a spray coating method (a method such as a thermal spraying method, an aerosol deposition method, an aerosol gas deposition method, a powder jet deposition method, a particle jet deposition method, and a cold spraying method), a PVD method (a sputtering method, a pulsed laser deposition method, or the like), a CVD method, or the like. Regardless of which method is used, it is desirable to carry out a method at a temperature of 1100°C or lower in order to prevent deterioration of the metal substrate 1. In order to flatten an upper surface of the reaction preventing layer 5, for example, a leveling treatment or a surface cutting and polishing treatment may be performed after forming the reaction preventing layer 5, or press processing may be performed after wet formation and before calcination.

### (Counter Electrode Layer Forming Step)

At the counter electrode layer forming step, the counter electrode layer 6 is formed on the reaction preventing layer 5 as a thin layer. The counter electrode layer 6 can be formed by appropriately using a low-temperature calcination method, a spray coating method (a method such as a thermal spraying method, an aerosol deposition method, an aerosol gas deposition method, a powder jet deposition method, a particle jet deposition method, and a cold spraying method), a PVD method (a sputtering method, a pulsed laser deposition method, or the like), a CVD method, or the like. Regardless of which method is used, it is desirable to carry out a method at a temperature of 1100°C or lower in order to prevent deterioration of the metal substrate 1.

As described above, the electrochemical element E can be produced. A base material with an electrode layer for a metal-supported electrochemical element can be produced by performing the electrode layer forming step and the interlayer forming step described above.

A form in which the electrochemical element E does not include either or both the interlayer 3 and the reaction preventing layer 5 can also be obtained. That is, a form in which the electrode layer 2 and the electrolyte layer 4 are formed to be in contact with each other or a form in which the electrolyte layer 4 and the counter electrode layer 6 are formed to be in contact with each other can also be obtained. In this case, in the above-described producing method, the interlayer forming step and the reaction preventing layer forming step are not provided.

### [Electrochemical Element, Electrochemical Module, Electrochemical Device, and Energy System]

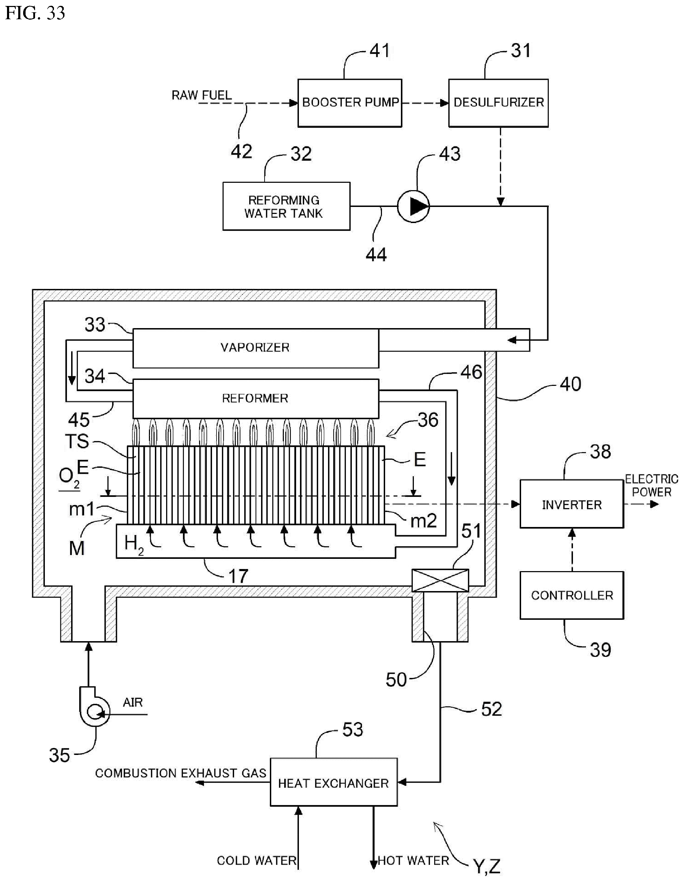

An example of a solid oxide fuel cell with an electrochemical element E, an electrochemical module M, an electrochemical device Y, and an energy system Z will be described with reference to FIGS. 32 and 33.

In the electrochemical element E of this form, as shown in FIG. 32, a U-shaped member 7 is attached to the back surface of the metal substrate 1, and the metal substrate 1 and the U-shaped member 7 form a tubular support TS. The same material to form the metal substrate 1 (an alloy material in which a base material is a Fe-Cr alloy and a Co composite oxide film is formed on an outer surface thereof) can be used for the U-shaped member 7 (separator). In a case where the electrochemical element E serves as a fuel cell, a flow channel formed between the metal substrate 1 and the U-shaped member 7 serves as a supply channel for a reduction gas (typically, a fuel gas containing hydrogen).

As shown in FIG. 32, a plurality of the electrochemical elements E are laminated with a current-collecting member 26 interposed therebetween to form the electrochemical module M. Here, lamination is an example of assembling. The current-collecting member 26 is bonded to the counter electrode layer 6 of each electrochemical element E and the U-shaped member 7, and allows the counter electrode layer 6 of each electrochemical element E and the U-shaped member 7 to be electrically connected to each other. Therefore, integral and electrical connection is achieved in the electrochemical module M in a lamination direction. The same material to form the metal substrate 1 (an alloy material in which a base material is a Fe-Cr alloy and a composite oxide film containing Co is formed on an outer surface thereof) can also be used for the current-collecting member 26. The alloy member described above is used.

As shown in FIG. 33, the electrochemical module M includes a gas manifold 17, a terminal member m1, and a current extraction section m2. In the plurality of the electrochemical elements E laminated with the current-collecting member 26 interposed therebetween as shown in FIG. 32, one open end portion of the tubular support TS is connected to the gas manifold 17 to supply a gas from the gas manifold 17 (in this example, the reformed gas reformed by the reformer 34). The supplied gas flows through the inside of the tubular support TS and is supplied to the electrode layer 2 through the through-holes 1a of the metal substrate 1.

FIG. 33 shows an outline of the energy system Z and the electrochemical device Y.

The energy system Z includes the electrochemical device Y and a heat exchanger 53 as an exhaust heat utilization section for reusing heat discharged from the electrochemical device Y.

The electrochemical device Y includes an electrochemical module M, a fuel supply section that includes a desulfurizer 31 and a reformer 34 and that supplies a fuel gas containing a reduction gas to the electrochemical module M, and an inverter 38 as an electric power conversion section for extracting electric power from the electrochemical module M. Therefore, the electrochemical device Y is a power generation device that generates power by supplying a fuel.

Specifically, the electrochemical device Y includes a desulfurizer 31, a reforming water tank 32, a vaporizer 33, a reformer 34, a blower 35, a combustion section 36, an inverter 38, a controller 39, a storage container 40, and an electrochemical module M.

The desulfurizer 31 removes (desulfurizes) a sulfur compound component contained in a hydrocarbon-based raw fuel such as a city gas. In a case where a sulfur compound is contained in a raw fuel, the desulfurizer 31 can be provided to suppress the influence of the sulfur compound on the reformer 34 or the electrochemical elements E. The vaporizer 33 produces steam from reforming water supplied from the reforming water tank 32. The reformer 34 steam-reforms a raw fuel desulfurized in the desulfurizer 31 by using the steam produced in the vaporizer 33 to produce a reformed gas containing hydrogen.

The electrochemical module M performs power generation by using a reformed gas supplied from the reformer 34 and air supplied from the blower 35 to cause an electrochemical reaction between the reformed gas and the air. In the combustion section 36, a reaction exhaust gas discharged from the electrochemical module M is mixed with air to combust combustible components in the reaction exhaust gas.

The electrochemical module M includes the plurality of the electrochemical elements E and the gas manifold 17. The plurality of the electrochemical elements E are disposed in parallel in a state of being electrically connected to each other, and end portions on one side (lower end portions) of the electrochemical elements E are fixed to the gas manifold 17. The electrochemical element E performs power generation by causing an electrochemical reaction between the reformed gas supplied through the gas manifold 17 and air supplied from the blower 35.

The inverter 38 adjusts output electric power of the electrochemical module M to electric power having the same voltage and the same frequency as those of electric power received from a commercial system (not shown). Therefore, the inverter 38 is an electric power converter that extracts electric power from the electrochemical element E or the electrochemical module M. The controller 39 controls the operation of the electrochemical device Y and the energy system Z.

The vaporizer 33, the reformer 34, the electrochemical module M, and the combustion section 36 are stored in the storage container 40. The reformer 34 reforms a raw fuel by using combustion heat generated by the combustion of the reaction exhaust gas in the combustion section 36.

The raw fuel is supplied to the desulfurizer 31 through the raw fuel supply channel 42 by an operation of a booster pump 41. The reforming water in the reforming water tank 32 is supplied to the vaporizer 33 through a reforming water supply channel 44 by an operation of a reforming water pump 43. The raw fuel supply channel 42 is joined at a location downstream of the desulfurizer 31 into the reforming water supply channel 44, and supplies the reforming water and the raw fuel, which are joined at a location outside the storage container 40 to the vaporizer 33 provided inside the storage container 40.

The reforming water is vaporized by the vaporizer 33 to be steam. The raw fuel containing steam generated by the vaporizer 33 is supplied to the reformer 34 through a steam-containing raw fuel supply channel 45. The raw fuel is steam-reformed in the reformer 34 to generate a reformed gas whose main component is a hydrogen gas (a fuel gas containing hydrogen, which is the reduction gas described so far). The reformed gas generated by the reformer 34 is supplied to the gas manifold 17 of the electrochemical module M through a reformed gas supply channel 46.

The reformed gas supplied to the gas manifold 17 is distributed to the plurality of the electrochemical elements E, and is supplied from a lower end of a connection portion between the electrochemical elements E and the gas manifold 17 to the electrochemical elements E. Mainly hydrogen in the reformed gas is used for an electrochemical reaction in the electrochemical elements E. Therefore, the reformer 34 is a fuel converter that supplies a gas containing a reduction gas to the electrochemical element E or the electrochemical module M. The reaction exhaust gas containing a residual hydrogen gas that is not used in the reaction is discharged from upper ends of the electrochemical elements E to the combustion section 36.

The reaction exhaust gas is combusted in the combustion section 36 and becomes a combustion exhaust gas, and the combustion exhaust gas is discharged to the outside of the storage container 40 from a combustion exhaust gas outlet 50. A combustion catalyst section 51 (for example, a platinum-based catalyst) is disposed at the combustion exhaust gas outlet 50 to combust and remove reduction gases such as carbon monoxide and hydrogen contained in the combustion exhaust gas. The combustion exhaust gas discharged from the combustion exhaust gas outlet 50 is transmitted to the heat exchanger 53 through a combustion exhaust gas discharge channel 52.

The heat exchanger 53 exchanges heat between the combustion exhaust gas generated by combustion in the combustion section 36 and cold water supplied to generate hot water. That is, the heat exchanger 53 operates as an exhaust heat utilization section that reuses the heat discharged from the electrochemical device Y.

In addition, instead of the exhaust heat utilization section, a reaction exhaust gas utilization section (not shown) may be provided for utilizing the reaction exhaust gas discharged (without combustion) from the electrochemical module M. The reaction exhaust gas contains a residual hydrogen gas that has not been used in the reaction in the electrochemical elements E. In the reaction exhaust gas utilization section, the residual hydrogen gas is used to utilize heat by combustion and power generation by a fuel cell or the like, so that energy can be effectively utilized.

### [Another Embodiment of Electrochemical Module]

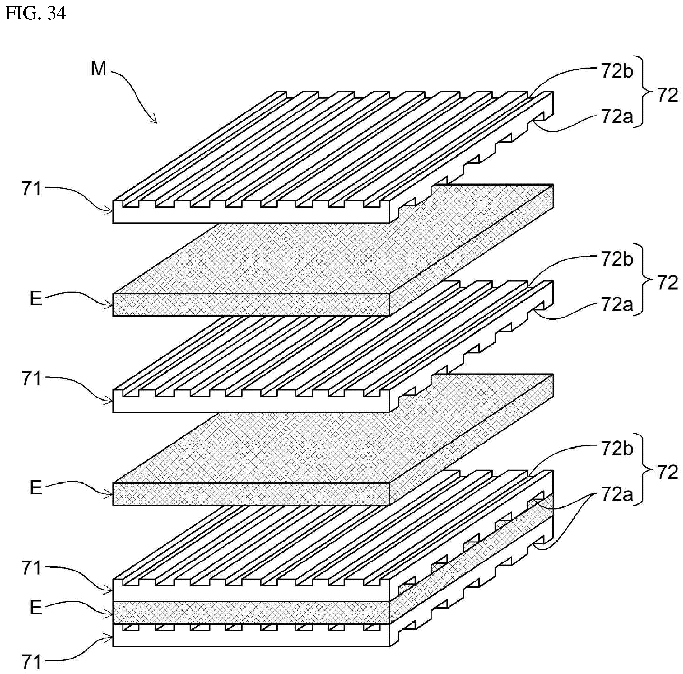

FIG. 34 shows another embodiment of the electrochemical module M.

Regarding the electrochemical module M according to another embodiment, the electrochemical module M is configured to laminate the above-described electrochemical elements E with an intercell connection member 71 interposed therebetween.

The intercell connection member 71 is a plate-shaped member having conductivity and no gas permeability, and grooves 72 orthogonal to each other are formed on the front surface and the back surface. As the intercell connection member 71, a metal such as stainless or a metal oxide can be used.

As shown in FIG. 34, in a case where the electrochemical elements E are laminated so that the intercell connection member 71 is interposed therebetween, a gas can be supplied to the electrochemical elements E through the grooves 72. Specifically, the grooves 72 on one side are first gas flow channels 72a to supply a gas to the front side of each electrochemical element E, that is, the counter electrode layer 6. The grooves 72 on the other side are second gas flow channels 72b, and a gas is supplied to the electrode layer 2 from the back side of each electrochemical element E, that is, the surface of the back side of the metal substrate 1 through the through-holes 1a.

In a case where the electrochemical module M is operated as a fuel cell, an oxidization gas (typically, air containing oxygen) is supplied to the first gas flow channels 72a, and a reduction gas (typically, a fuel gas containing hydrogen) is supplied to the second gas flow channels 72b. Then, a reaction in the electrochemical module M as a fuel cell proceeds in the electrochemical elements E, and an electromotive force and a current are generated. The generated electric power is extracted from the intercell connection members 71 on both ends of the laminated electrochemical elements E to the outside of the electrochemical module M.

In the present embodiment, the grooves 72 orthogonal to each other are formed on the front surface and the back surface of each intercell connection member 71, but the grooves 72 parallel to each other can also be formed on the front surface and the back surface of the intercell connection member 71.

### [Other Embodiments]

(1) In the above-described embodiment, the electrochemical element E is used for a solid oxide fuel cell, but the electrochemical element E can also be used for an oxygen sensor or the like that causes an electrolysis reaction, such as a solid oxide electrolysis cell or a solid oxide.

Hereinafter, an example of using the electrochemical element E as a solid oxide electrolysis cell will be described with reference to the drawings. As shown above, this example is an example in which the electrochemical device Y according to the present invention is a hydrocarbon production system 100, and the electrochemical element E is operated by supplying a predetermined raw gas and electric power to serve as an electrolysis reaction section 10. That is, as a result of supplying water H₂O and carbon dioxide CO₂ to the electrolysis reaction section 10, carbon monoxide CO and hydrogen H₂ as raw materials for synthesizing hydrocarbons are obtained by decomposing water H₂O and carbon dioxide CO₂. Then, a hydrocarbon can be obtained in a hydrocarbon synthesis reaction section 30.

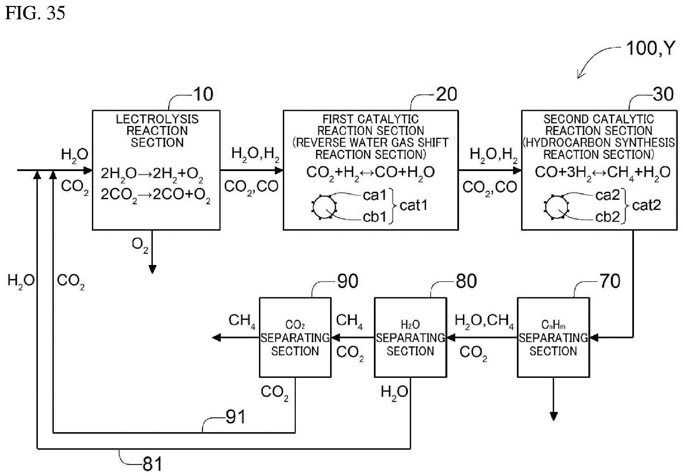

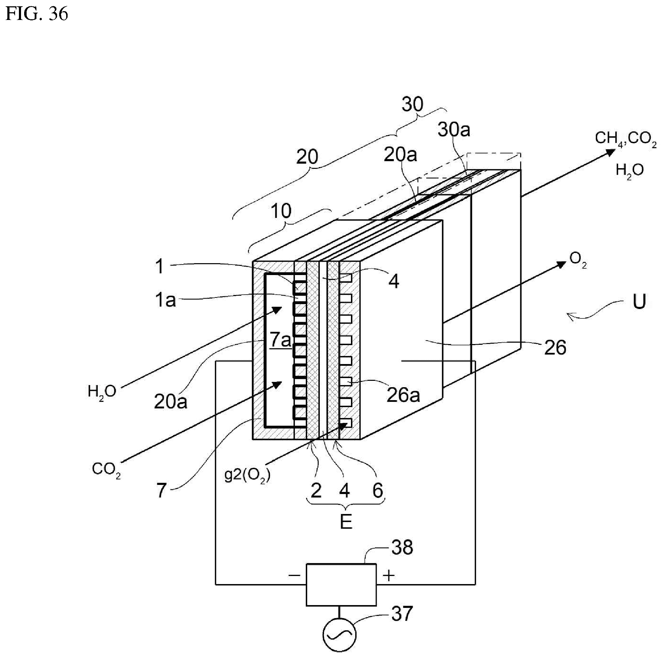

FIG. 35 is a system diagram showing the overall configuration of the hydrocarbon production system 100, and FIG. 36 shows a configuration example of an electrolysis cell unit U established as the hydrocarbon production system 100.

As can be seen from FIG. 35, the hydrocarbon production system 100 includes the electrolysis reaction section 10, a first catalytic reaction section 20, a second catalytic reaction section 30, a heavy hydrocarbon separating section 70 (shown as a CnHm separating section), a water separating section 80 (shown as a H₂O separating section), and a carbon dioxide separating section 90 (shown as a CO₂ separating section) in this order. In FIG. 35, the electrolysis reaction section 10, the first catalytic reaction section 20, and the second catalytic reaction section 30 are shown separately, but as shown in FIG. 36, these sections 10, 20, and 30 are provided to serve as the single electrolysis cell unit U.

The electrolysis reaction section 10 is a section that electrolyzes at least a part of a gas flowing thereinto, the first catalytic reaction section 20 is a reverse water gas shift reaction section in which at least a part of a gas flowing thereinto is subjected to a reverse water gas shift reaction, and the second catalytic reaction section 30 is a hydrocarbon synthesis reaction section that synthesizes at least a part of a gas flowing thereinto into a hydrocarbon. Here, the synthesized hydrocarbon is mainly CH₄ (hydrocarbon having one carbon atom), but may include lower saturated hydrocarbon having 2 to 4 carbon atoms and the like. Further, a hydrocarbon having a larger number of carbon atoms than the lower saturated hydrocarbon and being in no saturated state is also synthesized. These heavy hydrocarbons can be collected and separated by the heavy hydrocarbon separating section 70 as a gas released from the second catalytic reaction section 30 cools.

The water separating section 80 and the carbon dioxide separating section 90 are sections in which at least some of predetermined components (H₂O and CO₂ in the order of description) are removed from the gas flowing inside. As shown in the figure, the components removed and recovered through these sections are returned to a predetermined section of the system through a water return channel 81 and a carbon dioxide return channel 91 and are reused. H₂O and CO₂ returned through the water return channel 81 and the carbon dioxide return channel 91 are shown on both return channels 81 and 91, respectively.

As a result, the hydrocarbon production system 100 is established as a carbon closed system that does not substantially release CO₂ to the outside of the system.

In the same figure, the gas flowing into each section is shown in front of each section, and the gas released from the section is shown after each section.

H₂O and CO₂ as raw gases flow in the electrolysis reaction section 10 and are electrolyzed internally, H₂O is decomposed into H₂ and O₂, and some CO₂ is decomposed into CO and O₂, which are released.

The reaction is described as follows.

2H₂O → 2H₂ + O₂ (Formula 1)

2CO₂ → 2CO + O₂ (Formula 2)

These Formulae 1 and 2 are also shown in the box representing the electrolysis reaction section 10 in FIG. 35.

At least H₂ and CO₂ flow in the first catalytic reaction section 20 (reverse water gas shift reaction section), a reverse water gas shift reaction occurs inside the first catalytic reaction section 20, CO₂ becomes CO, and H₂ becomes H₂O, which are released.

The reaction is described as the following equilibrium reaction, but the reverse water-gas shift reaction is a reaction (reaction proceeding in a direction in which CO₂ and H₂ react to generate CO and H₂O) in which the reaction described by the following formula 3 proceeds to the right.

CO₂ + H₂ ⇔ CO + H₂O (Formula 3)

Formula 3 is also shown in a box showing the first catalytic reaction section 20 (reverse water-gas shift reaction section) in FIG. 35. A reverse water-gas shift catalyst cat1 used in the reaction is also schematically shown in this box.

As this kind of the reverse water gas shift catalyst cat1, the inventors have considered that a catalyst obtained by supporting any one of nickel or iron or both nickel and iron on one or more carriers cb1 (metal oxide carriers) selected from ceria-based metal oxides, zirconia-based metal oxides, and alumina-based metal oxides is preferable as a catalyst activation component ca1 (metal catalyst).

At least H₂ and CO flow into the second catalytic reaction section 30 (hydrocarbon synthesis reaction section) to synthesize a hydrocarbon through a catalytic reaction. For example, a reaction in which CH₄ is synthesized from CO and H₂ is described as the following equilibrium reaction, and the reaction in which CH₄ is synthesized from CO and H₂ is a reaction in which the reaction described by the following Formula 4 proceeds to the right (CO and H₂ react with each other to form CH₄ and H₂O).

CO + 3H₂ ⇔ CH₄ + H₂O (Formula 4)

Formula 4 is also shown in the box representing the second catalytic reaction section 30 (hydrocarbon synthesis reaction section) of FIG. 35.

A hydrocarbon synthesis catalyst cat2 used in the reaction is also schematically shown in the box.

As this kind of the hydrocarbon synthesis catalyst cat2, the inventors have considered that a catalyst obtained by supporting at least ruthenium on a carrier cb2 (metal oxide carrier), for example, alumina or the like, is preferable as a catalyst activation component ca2.

Further, the equilibrium reaction of (Formula 3) also occurs at this site.

A Fischer-Tropsch (FT) synthesis reaction can proceed depending on the kinds of the catalyst used in the second catalytic reaction section 30, so that hydrocarbons such as ethane and propane are synthesized from CO and H₂.

H₂O generated in the water separating section 80 is separated and returned to the upstream of the electrolysis reaction section 10 through the water return channel 81 (water recycling line).

CO₂ generated in the carbon dioxide separating section 90 is separated and returned to the upstream of the electrolysis reaction section 10 through the carbon dioxide return channel 91 (carbon dioxide recycling line).

As a result, in this hydrocarbon production system 100, the hydrocarbon is finally synthesized and can be supplied to the outside.

FIG. 36 shows the electrolysis cell unit U including the electrochemical element E in the electrolysis reaction section 10 and including the reverse water gas shift reaction section 20 and the hydrocarbon synthesis reaction section 30 which are provided side by side. FIG. 36 is a diagram showing the electrolysis cell unit U, including an advection direction of the gas.

In this figure, in order to clarify the electrochemical reaction system, the interlayer 3 and the reaction preventing layer 5 of the electrochemical element E in FIG. 31 are not provided. Further, in comparison with FIG. 35, the heavy hydrocarbon separating section 70, the water separating section 80, and the carbon dioxide separating section 90 are not provided.

This electrolysis cell unit U is also configured to include the electrochemical element E in which the electrode layer 2 and the counter electrode layer 6 are formed with the electrolyte layer 4 interposed therebetween, the metal substrate 1 as a metal support that serves as a separator, the U-shaped member 7 that serves as a supply channel forming member, and the current-collecting member 26 that serves as a supply channel forming member, and adopts a configuration in which an electrode layer-side gas supply channel 7a and a counter electrode layer-side gas supply channel 26a are formed. H₂O and CO₂ to be electrolyzed are supplied to the electrode layer-side gas supply channel 7a. On the other hand, an air g2 (O₂) that is an example of an oxygen-containing gas is supplied to the counter electrode layer-side gas supply channel 26a. The electrochemical module M can be constructed by laminating (assembling) the electrolysis cell units U in the left-right direction of FIG. 36 in a thickness direction of the unit.

As described above, the electrolyte layer 4 and the electrode layer 2 as a part thereof can be constructed by using the coating composition b2 according to the present invention.

This configuration of another implementation is an example in which the electrochemical element E is operated as the electrolysis reaction section 10, but as can be seen from FIG. 36, direct current power is supplied between the electrode layer 2 and the counter electrode layer 6. In the shown example, an example in which the electric power obtained from an alternating-current power 37 is AC/DC converted by the inverter 38 and supplied to the electrochemical element E is shown. Therefore, in a case where the inverter 38 is the electrochemical element E or an assembly of the electrochemical elements E, the inverter 38 is an electric power converter that supplies electric power to the electrochemical module M that is the assembly.

However, the reverse water gas shift catalyst cat1 is applied on an inner surface of the electrode layer-side gas supply channel 7a (an inner surface of the U-shaped member 7 on the supply channel side, a surface of the metal substrate 1 opposite to a surface on which the electrode layer 2 is formed, and surfaces of a plurality of through-holes 1a). This coating layer 20b is shown by a thick solid line.

Further, the electrode layer-side gas supply channel 7a extends over the electrolysis reaction section 10, and the coating layer 20b is also provided on the extension side. Further, a hydrocarbon synthesis catalyst cat2 is applied to the tip thereof, and a coating layer 30b is provided to form the hydrocarbon synthesis reaction section 30.

As a result, in this configuration, in a case where the hydrocarbon synthesis reaction section 30 is the electrochemical element E or an assembly of the electrochemical elements E, the hydrocarbon synthesis reaction section 30 is an electric power converter that supplies electric power to the electrochemical module M that is the assembly.

A hydrocarbon can be obtained in the hydrocarbon synthesis reaction section 30 by using a gas obtained in the electrolysis reaction section 10 and the reverse water gas shift reaction section 20.

(2) In the above embodiment, the metal-supported solid oxide fuel cell having a metal substrate 1 as a support is used, but in the present invention, an electrode-supported solid oxide fuel cell having the electrode layer 2 or the counter electrode layer 6 as a support, or an electrolyte-supported solid oxide fuel cell having the electrolyte layer 4 as a support can be used. In these cases, the electrode layer 2, the counter electrode layer 6, or the electrolyte layer 4 can be made to have a required thickness, so that the function as a support can be obtained.

(3) In the above embodiment, as a material of the electrode layer 2, for example, a composite material such as NiO-GDC, Ni-GDC, NiO-YSZ, Ni-YSZ, CuO-CeO₂, or Cu-CeO₂ was used, and as a material of the counter electrode layer 6, for example, a composite oxide such as LSCF or LSM was used. The electrochemical element E configured in this way can be used as a solid oxide fuel cell by supplying hydrogen gas to the electrode layer 2 to serve as a fuel electrode and supplying air to the counter electrode layer 6 to serve as an air electrode. It is also possible to modify this configuration to configure the electrochemical element E so that the electrode layer 2 can serve as an air electrode and the counter electrode layer 6 can serve as a fuel electrode. That is, a composite oxide such as LSCF or LSM is used as a material of the electrode layer 2, and for example, a composite material such as NiO-GDC, Ni-GDC, NiO-YSZ, Ni-YSZ, CuO-CeO₂, or Cu-CeO₂ is used as a material of the counter electrode layer 6. In the electrochemical element E configured as described above, air can be supplied to the electrode layer 2 to serve as an air electrode, a hydrogen gas can be supplied to the counter electrode layer 6 to serve as a fuel electrode, and the electrochemical element E can be a solid oxide fuel cell.

(4) In the above embodiment, an example in which the composite oxide film containing Co is formed on the surface of the Fe-Cr alloy as the metal substrate 1 to prevent volatilization of Cr and the like from this material, but one or more of the U-shaped member 7 as a separator, the gas manifold 17, the current-collecting member 26, and the intercell connection member 71 as an interconnector may be made of this type of alloy member.

On the other hand, as this type of oxide film, an oxide film containing only Co may be formed on the surface of the Fe-Cr alloy. It is effective to the volatilization of Cr.

The configurations disclosed in the above-described embodiments can be applied in combination with the configurations disclosed in other embodiments unless a contradiction occurs. Further, the embodiments disclosed in the present specification are examples, and the embodiments of the present invention are not limited thereto, and can be appropriately modified without departing from the objective of the present invention.

### INDUSTRIAL APPLICABILITY

The present invention provides a method for producing a coating composition in which a film can be formed at a low cost by a simple method using zirconium alkoxide and an yttrium compound as starting raw materials, and an yttria-stabilized zirconia layer having few defects such as cracks can be obtained, and which can be suitably used for an yttria-stabilized zirconia layer, an electrochemical element, an electrochemical module, an electrochemical device, an energy system, a solid oxide fuel cell, and a solid oxide electrolysis cell.

### REFERENCE SIGNS LIST

1: Metal substrate (metal support)
1a: Through-hole
2: Electrode layer
3: Interlayer
4: Electrolyte layer
5: Reaction preventing layer
6: Counter electrode layer
7: U-shaped member (separator)
10: Electrolysis reaction section
17: Gas manifold (manifold)
20: First catalytic reaction section (reverse water gas shift reaction section)
26: Current-collecting member
30: Second catalytic reaction section (hydrocarbon synthesis reaction section/fuel converter)
31: Desulfurizer
32: Reforming water tank
33: Vaporizer
34: Reformer (fuel converter)
35: Blower
36: Combustion section
38: Inverter (electric power converter)
39: Controller
40: Storage container
41: Booster pump
42: Raw fuel supply channel
43: Reforming water pump
44: Reforming water supply channel
45: Steam-containing raw fuel supply channel
46: Reformed gas supply channel
50: Combustion exhaust gas outlet
51: Combustion catalyst section
52: Combustion exhaust gas discharge channel
53: Heat exchanger (exhaust heat utilization section)
70: Heavy hydrocarbon separating section
71: Intercell connection member (interconnector)
72: Groove
72a: First gas flow channel
72b: Second gas flow channel
80: Water separating section
90: Carbon dioxide separating section
100: Hydrocarbon production system
E: Electrochemical element
M: Electrochemical module
TS: Tubular support
U: Electrolysis cell unit
Y: Electrochemical device
Z: Energy system
o: Zirconium alkoxide
p: Yttrium compound
q: Chelating compound
r: Polyalkylene glycol
s: Catalyst
t: Water
u: Organic solvent

## Claims

1. A method for producing a coating composition, comprising:
mixing a composition containing zirconium alkoxide, an yttrium compound, a chelating compound, polyalkylene glycol, a catalyst, water, and an organic solvent to produce a coating composition.

2. The method for producing a coating composition according to claim 1,
wherein in the coating composition, a content of the zirconium alkoxide is 10% to 30% by mass, a content of the yttrium compound is 1% to 10% by mass, a content of the chelating compound is 3% to 15% by mass, a content of the polyalkylene glycol is 0.3% to 7% by weight, a content of the catalyst is 0.1% to 2% by mass, a content of the water is 0.1% to 2% by mass, and a content of the organic solvent is a remainder.

3. The method for producing a coating composition according to claim 1 or 2,
wherein the zirconium alkoxide is any one or more of zirconium (IV) methoxide, zirconium (IV) ethoxide, zirconium (IV) n-propoxide, zirconium (IV) i-propoxide, zirconium (IV) n-butoxide, zirconium (IV) i-butoxide, zirconium (IV) sec-butoxide, or zirconium (IV) t-butoxide.

4. The method for producing a coating composition according to any one of claims 1 to 3,
wherein the yttrium compound is any one or more of yttrium nitrate, yttrium chloride, yttrium sulfate, yttrium phosphate, yttrium acetate, yttrium carbonate, yttrium (III) ethoxide, yttrium (III) n-propoxide, or yttrium (III) i-propoxide.

5. The method for producing a coating composition according to any one of claims 1 to 4,
wherein the chelating compound is represented by General Formula (1),
R₁-CO-CH₂-CO-R₂ (General Formula (1))
[in the formula, R₁ and R₂ represent an alkyl group having 1 to 6 carbon atoms (including a fluorinated alkyl group) or a monocyclic or bicyclic aryl group; R₁ and R₂ are the same as or different from each other, and each represents an alkyl group having 1 to 6 carbon atoms or a monocyclic or bicyclic aryl group, and R₁ and R₂ may be linked to each other to form a cyclic alkyl group].

6. The method for producing a coating composition according to any one of claims 1 to 5,
wherein the chelating compound is any one or more of 2,4-pentanedione, 2,4-hexanedione, 3,5-heptanedione, 2,6-dimethyl-3,5-heptanedione, 2,2,6,6-tetramethyl-3,5-heptanedione, 1-phenyl-1,3-butanedione, 1,3-diphenyl-1,3-propanedione, 1,1,1-trifluoro-2,4-pentanedione, 1,1,1,5,5,5-hexafluoro-2,4-pentanedione, or 1,3-cyclohexanedione.

7. The method for producing a coating composition according to any one of claims 1 to 6,
wherein the polyalkylene glycol is any one or more of tetraethylene glycol, pentaethylene glycol, polyethylene glycol 200, polyethylene glycol 400, polyethylene glycol 600, polyethylene glycol 1000, tripropylene glycol, tetrapropylene glycol, polypropylene glycol 400, polypropylene glycol 700, or polypropylene glycol 1000.

8. The method for producing a coating composition according to any one of claims 1 to 7,
wherein the catalyst is any one or more of hydrochloric acid, nitric acid, sulfuric acid, phosphoric acid, carbonic acid, or acetic acid.

9. The method for producing a coating composition according to any one of claims 1 to 8,
wherein the organic solvent is any one or more of methanol, ethanol, 1-propanol, 2-propanol, 1-butanol, 2-methyl-1-propanol, 2-butanol, or 2-methyl-2-propanol.

10. An yttria-stabilized zirconia layer which is obtained by curing the coating composition produced by the method for producing a coating composition according to any one of claims 1 to 9.

11. An electrochemical element comprising:
the yttria-stabilized zirconia layer according to claim 10.

12. The electrochemical element according to claim 11,
wherein the electrochemical element includes a metal support.

13. An electrochemical module comprising:
a plurality of the electrochemical elements according to claim 11 or 12, which are disposed in a state of being assembled.

14. An electrochemical device comprising:
the electrochemical element according to claim 11 or 12 or the electrochemical module according to claim 13; and
a fuel converter configured to supply a gas containing a reduction gas to the electrochemical element or the electrochemical module, or a fuel converter configured to convert a gas containing a reduction gas generated by the electrochemical element or the electrochemical module.

15. An electrochemical device comprising, at least:
the electrochemical element according to claim 11 or 12 or the electrochemical module according to claim 13; and
an electric power converter configured to extract electric power from the electrochemical element or the electrochemical module, or an electric power converter configured to supply electric power to the electrochemical element or the electrochemical module.

16. An energy system comprising:
the electrochemical device according to Claim 14 or 15; and
an exhaust heat utilization section configured to reuse heat to be discharged from the electrochemical device.

17. A solid oxide fuel cell comprising:
the electrochemical element according to claim 11 or 12,
wherein a power generation reaction is caused by the electrochemical element.

18. A solid oxide electrolysis cell comprising:
the electrochemical element according to claim 11 or 12,
wherein an electrolysis reaction is caused by the electrochemical element.
